# EUROPEAN PATENT APPLICATION

(11) **EP 1 652 815 A1**
(43) Date of publication of application: **03.05.2006**
(21) Application number: 03741495.0
(22) Date of filing: 18.07.2003
(51) Int. Cl.: C01B 31/02

(54) **CARBON NANOTUBE MANUFACTURING APPARATUS AND METHOD FOR MANUFACTURING CARBON NANOTUBE**

(71) Applicant: Akamatsu, Norio, Tokushima-shi, Tokushima 770-0813 (JP); Nishikado, Hiroshi, Bunkyo-ku, Tokyo 112-0013 (JP)
(72) Inventor: AKAMATSU, Norio, Tokushima-shi, Tokushima 770-0813 (JP); NISHIKADO, Hiroshi, Bunkyo-ku, Tokyo 112-0006 (JP); YANO, Kensuke, Bunkyo-ku, Tokyo 112-0005 (JP)
(74) Representative: HOFFMANN EITLE
(86) International application number: PCT/JP2003/009172
(87) International publication number: WO 2005/007571

(57) **Abstract**

A carbon nanotube manufacturing method is employed, in which a carbon nanotube manufacturing apparatus (1000, 2000, 3000) comprises an ionizing means (e.g., a negative ion generator (10)) for ionizing a vapor of a certain carbon-containing compound, an electric field generating means (e.g., a direct-current power supply (21), a cathode (22) and an anode (23)) for generating an electric field and a heating means (e.g., a high-frequency heater (30)) for heating a growth substrate (50, 55) disposed within the electric field generated by the electric field generating means, and in which a vaporized gas of the carbon-containing compound, the vaporized gas being ionized, is caused to pass through the electric field and to come into contact with the heated growth substrate, so that a well aligned growth of carbon nanotube (4) on the growth substrate can be obtained.

## Description

### FIELD OF THE INVENTION

The present invention relates to a carbon nanotube manufacturing apparatus and a carbon nanotube manufacturing method.

### BACKGROUND OF THE INVENTION

In recent years, carbon nanotubes are receiving much attention as for electrode materials such as FED (field emission display) electrodes, capacitor electrodes, and battery electrodes, as well as functional materials for hydrogen storage.

In particular, when an electric field is applied to carbon nanotubes disposed on a conductive substrate perpendicularly, the field concentrates to the tips of carbon nanotubes because the carbon nanotube has a very small diameter, attracts electrons to the tips of carbon nanotubes, ultimately electrons are emitted from the tips without difficulty. In addition, if the electric resistance of the substrate is low, the electrons which are depleted by the emission can be easily supplied to increase the amount of electron emission, facilitating the electron emission to be maintained.

Conventionally, as a method of aligned growth of the carbon nanotubes vertically on a substrate, there is known a method disclosed in the Japanese Patent Laid-open Publication JP-A-2003-12312, in which a silicon substrate having iron catalyst vapor deposited on the surface thereof is heated while the substrate is being dipped in an alcohol solution such as methanol or ethanol, causing highly aligned carbon nanotubes to be precipitated and grown.

In accordance with the above patent disclosure, however, a silicon substrate, while being dipped in an alcohol solution, must be heated to approximately 900 degrees centigrade to synthesize and grow carbon nanotubes, and the alcohol solution has to be kept at a temperature below its boiling point. In addition, since a large quantity of alcohol solution is used, it is indispensable to sufficiently take care of the maintenance and control of the carbon nanotubes synthesizing apparatus, in order to prevent the explosion and fire outbreak caused by the mixing of vaporized alcohol with the air. Since the growth direction of the carbon nanotubes is controlled by the temperature gradient at the surface of the silicon substrate, the temperature thereof must be appropriately controlled in order to allow a well aligned growth.

Therefore, one of the objects of the present invention is to provide a carbon nanotube manufacturing apparatus and a a carbon nanotube manufacturing method which require easier maintenance and control and which allows the highly aligned growth of carbon nanotubes.

### SUMMARY OF THE INVENTION

The present invention has been made in view of the above circumstances and has an object to overcome the above problems and to provide a carbon nanotube manufacturing apparatus (1000, 2000) including an aligned growth means (e.g., an aligned growth apparatus 300) for allowing a well aligned growth of a plurality of carbon nanotubes (4) on a growth substrate (50, 55) in a generally vertical direction,
wherein said aligned growth means comprises:
an ionizing means (e.g., a negative ion generator 10) for ionizing a vaporized gas of a predetermined carbon-containing compound;
an electric field generating means (e.g., an electric field generator 20) for generating an electric field; and
a heating means (e.g., a high-frequency heater 30) for heating said growth substrate disposed within the electric field generated by said electric field generating means, and
wherein said aligned growth means causes the vaporized gas of said carbon-containing compound, the vaporized gas being negatively charged by said ionizing means, to pass through the electric field generated by said electric field generating means, causing the vaporized gas of said carbon-containing compound to come into contact with said growth substrate.

In accordance with the carbon nanotube manufacturing apparatus of the present invention, the carbon nanotube manufacturing apparatus causes the vaporized gas of a predetermined carbon-containing compound, the vaporized gas being ionized by an ionizing means, to pass through the electric field generated by an electric field generating means, causing the vaporized gas of the carbon-containing compound to come into contact with a growth substrate. The growth substrate at this stage has been heated by a heating means, so that the vaporized gas of the carbon-containing compound brought into contact with the growth substrate can have a higher reactivity due to the heat, is pyrolyzed into water, hydrogen, and carbon, so that the carbons form the carbon nanotubes. The carbon nanotubes formed in this manner grow in good alignment with the direction of the electric field due to the effect of the electric field, allowing the well aligned carbon nanotubes to be manufactured.

Therefore, well aligned carbon nanotubes can be manufactured with easier maintenance and control than the previous method of formation of carbon nanotubes by dipping a silicon substrate within an alcohol solution.

In the carbon nanotube manufacturing apparatus in accordance with the present invention,
said growth substrate is preferably a substrate with a catalyst film (3) formed on the surface of a silicon layer (e.g., a silicon film 2, a silicon substrate 5) comprising the silicon or a silicon compound. If the growth substrate is a substrate with a catalyst film formed on the surface of the silicon layer having the silicon or silicon compound, a well aligned growth of carbon nanotubes thereon is suitably obtained.

The silicon and silicon compound are materials for suitably growing carbon nanotubes, so that the carbon nanotubes can be suitably grown thereon. Some materials for the silicon layer includes silicon (Si) and silicon compound, for example, silicon carbide.

The catalyst film is a material which is necessary for the aligned growth of carbon nanotubes and which promotes the growth as well. For the catalyst film, some materials such as iron, iron oxide, cobalt, and nickel, may be used.

Also in the carbon nanotube manufacturing apparatus in accordance with the present invention,
said ionizing means comprises a negative ion generator (10),
said negative ion generator provides electrons to the vaporized gas of said carbon-containing compound, to thereby negatively charge the vaporized gas of said carbon-containing compound. If the ionizing means is a negative ion generator, because the negative ion generator provides electrons to the vaporized gas of the carbon-containing compound, allowing the vaporized gas of the carbon-containing compound to be negatively charged, the vaporized gas of the carbon-containing compound can be negatively charged in a much secured manner.

In the carbon nanotube manufacturing apparatus in accordance with the present invention,
said apparatus may comprise:
a growth substrate forming means (e.g., a growth film forming apparatus 100 and a catalyst film forming apparatus 200) for forming said growth substrate by forming a growth film (e.g., a silicon film 2) on a surface of a predetermined metal substrate (1), followed by forming a catalyst film (3) on a surface of said growth film;
a growth film removing means (e.g., a growth film removing apparatus 400) for removing said growth film after the aligned growth of carbon nanotubes by said aligned growth means; and
a substrate forming means (e.g., a substrate forming apparatus 500) for melting said metal substrate, embedding in said metal substrate one end (4a) of each of said carbon nanotubes disposed on the surface of said metal substrate, and then solidifying said metal substrate.

In the carbon nanotube manufacturing apparatus, the growth substrate forming means forms a growth film on a surface of a predetermined metal substrate and deposits a catalyst film on the surface of the growth film to thereby form a growth substrate, then the growth film removing means removes the growth film after the aligned growth of carbon nanotubes by the aligned growth means, the substrate forming means melts the metal substrate, embeds one end of each of the carbon nanotubes disposed on the surface of the metal substrate and thereafter solidifies the metal substrate, so that the well aligned carbon nanotubes can be manufactured.

Since a plurality of carbon nanotubes manufactured in this manner have one end embedded in the metal substrate and are implanted quasi-vertically on the surface of the metal substrate, almost all of the carbon nanotubes are well aligned in the longitudinal direction and are arranged in a quasi-parallel manner.

The metal substrate may be a substrate formed from a metal including such as copper, aluminium, chromium, and stainless steel.

The growth film is a thin film formed from a material for suitably growing carbon nanotubes. Such materials for suitably growing carbon nanotubes include among others silicon (Si) and silicon compounds such as for example silicon carbide (SiC).

With the plurality of well aligned carbon nanotubes orderly arranged as such, an electric field can be applied in the longitudinal direction of almost all carbon nanotubes, and the electric field is concentrated at the tips of carbon nanotubes, so as to locally concentrate electrons thereto, allowing the electron emission at a high efficiency. Consequently, the resistance becomes lower to facilitate the electric current to flow easier, thereby increasing the efficiency of electron emission.

Since one end of each of the carbon nanotubes is embedded in the metal substrate, the carbon nanotubes are immobilized within the metal substrate, thereby increasing the fixing force between the carbon nanotubes and the metal substrate, to reduce the probability of dropout of the carbon nanotubes and to ultimately increase the durability.

In the carbon nanotube manufacturing apparatus in accordance with the present invention,
the apparatus may comprise:
a growth substrate forming means (e.g., a catalyst film forming apparatus 200) for forming a catalyst film (3) on a surface of a silicon substrate (5) to form said growth substrate;
a metal substrate forming means (e.g., a substrate forming apparatus 550) for inserting one end (4b) of each of said carbon nanotubes into a molten metal after the aligned growth of carbon nanotubes by said aligned growth means and thereafter solidifying said metal, to thereby form a metal substrate (1A); and
a separating means (e.g., a substrate separating apparatus 600) for separating said carbon nanotubes from said silicon substrate.

The carbon nanotube manufacturing apparatus forms a growth substrate by forming a catalyst film on the surface of a silicon substrate by the growth substrate forming means, then, after the aligned growth of carbon nanotubes by the aligned growth means, inserts the tips of carbon nanotubes into the molten metal by the metal substrate forming means, forms thereafter a metal substrate by solidifying the molten metal, and separates the carbon nanotubes from the silicon substrate by the separating means, thereby manufacturing well aligned carbon nanotubes.

Since a plurality of carbon nanotubes manufactured in this manner have the tips thereof being embedded in the metal substrate and are implanted quasi-vertically on the surface of the metal substrate, almost all of the carbon nanotubes are well aligned in the longitudinal direction and orderly arranged in a quasi-parallel manner.

The silicon substrate is a substrate formed from a silicon material for suitably growing carbon nanotubes thereon. Some exemplary silicon materials for suitably growing carbon nanotubes include among others silicon (Si) and silicon compounds such as for example silicon carbide (SiC).

The metal which forms the metal substrate includes for example copper, aluminium, chromium, and stainless steel.

As the tips of carbon nanotubes are embedded in the metal substrate, the carbon nanotubes are immobilized within the metal substrate and the fixing force between the carbon nanotubes and the metal substrate increases, to reduce the probability of dropout of the carbon nanotubes and to thereby increase the durability.

By transplanting the well aligned carbon nanotubes orderly grown on a silicon substrate into a metal substrate, the silicon substrate can be reused, allowing an expensive silicon substrate to be used for a plurality of cycles, to thereby reducing the manufacturing.

A carbon nanotube manufacturing method in accordance with the first aspect of the present invention includes:
a growth substrate formation step (e.g., a growth film forming apparatus 100, step S102) for forming a growth film on the surface of a predetermined metal substrate;
a catalyst film formation step (e.g., a catalyst film forming apparatus 200, step S103) for forming a catalyst film formed from a predetermined catalyst on the surface of said growth film formed in said growth film forming step;
an aligned growth step (e.g., an aligned growth apparatus 300, step S104) for causing a well aligned growth of a plurality of carbon nanotubes quasi-vertically on the surface of said metal substrate via said growth film by causing a catalytic reaction between said catalyst forming said growth film formed in said catalyst film formation step and the vaporized gas of a predetermined carbon-containing compound;
a growth film removal step (e.g., growth film removing apparatus 400, step S105) for removing said growth film to dispose on the surface of said metal substrate said carbon nanotubes alignedly grown in said aligned growth step; and
a substrate formation step (e.g., a substrate forming apparatus 500, step S106) for melting said metal substrate, embedding one end of each of said carbon nanotubes disposed on the surface of said metal substrate into said metal substrate, and thereafter solidifying said metal substrate.

In the carbon nanotube manufacturing method in accordance with the first aspect of the present invention, a growth film is formed on the surface of a predetermined metal substrate by the growth film formation step in the carbon nanotube manufacturing method, a catalyst film is formed on the surface of the growth film by the catalyst film formation step, a plurality of carbon nanotubes are well alignedly grown quasi-vertically on the surface of the metal substrate through the growth film by causing a catalytic reaction between the catalyst forming the catalyst film and the vaporized gas of a predetermined carbon-containing compound in the aligned growth step, the carbon nanotubes are disposed on the surface of the metal substrate by removing the growth film in the growth film removal step, one end of each of the carbon nanotubes is embedded in the molten metal substrate and thereafter the metal substrate is solidified in the substrate forming step, to thereby manufacture the well aligned carbon nanotubes.

In other words, the catalytic reaction of the catalyst forming the catalyst film with the vaporized gas of a predetermined carbon-containing compound provides the orderly aligned growth of a plurality of carbon nanotubes quasi-vertically on the surface of a metal substrate, allowing the manufacture of carbon nanotubes. Therefore, well aligned carbon nanotubes can be manufactured with easier maintenance and control than the previous formation method of carbon nanotubes by dipping a silicon substrate within an alcohol solution.

Since a plurality of carbon nanotubes manufactured in this manner have one ends being embedded in the metal substrate and are implanted quasi-vertically on the surface of the metal substrate, most of all of the carbon nanotubes are well aligned in the longitudinal direction and arranged in a quasi-parallel manner.

The growth film is a thin film formed from a material for suitably growing carbon nanotubes. Such materials for suitabely growing carbon nanotubes include among others silicon (Si) and silicon compounds such as for example silicon carbide (SiC).

The catalyst film is a material which is necessary for the aligned growth of the carbon nanotubes and which promotes the growth. The materials for the catalyst film include such as iron, iron oxide, cobalt, and nickel.

With the plurality of well aligned carbon nanotubes orderly arranged as such, an electric field can be applied in the longitudinal direction of almost all carbon nanotubes, and the electric field is concentrated at the tips of carbon nanotubes, so as to locally concentrate electrons thereto, allowing electron emission at a high efficiency. Consequently, the resistance becomes lower to facilitate the electric current to flow easier, thereby increasing the efficiency of electron emission.

Since one end of carbon nanotube is embedded in the metal substrate, the carbon nanotubes are immobilized within the metal substrate, thereby increasing the fixing force between the carbon nanotubes and the metal substrate, to reduce the probability of dropout of the carbon nanotubes and to ultimately increase the durability.

The carbon nanotube manufacturing method in accordance with the second aspect of the present invention comprises:
a catalyst film formation step (e.g., catalyst film forming apparatus 200, step S202) for forming a catalyst film formed from a predetermined catalyst on the surface of a predetermined growth substrate;
an aligned growth step (e.g., an aligned growth apparatus 300, step S203) for orderly growing a plurality of well aligned carbon nanotubes quasi-vertically on the surface of said metal substrate via said growth film by causing a catalytic reaction between said catalyst forming said growth film formed in said catalyst film forming step and the vaporized gas of a predetermined carbon-containing compound;
a carbon nanotube implanting step (e.g., a substrate forming apparatus (carbon nanotube implanting apparatus) 550, step S204) for melting a predetermined metal substrate, inserting the tips of said well aligned carbon nanotubes orderly grown in said aligned growth step into said molten metal substrate, and thereafter solidifying said metal substrate; and
a substrate separation step (e.g., a substrate separating apparatus 600, step S205) for separating said carbon nanotubes from said growth substrate;.

In accordance with the carbon nanotube manufacturing method of the second aspect of the present invention, the catalyst film formation step in the carbon nanotube manufacturing method forms a catalyst film on the surface of a predetermined growth substrate, the aligned growth step causes the catalytic reaction between the catalyst forming the catalyst film and the vaporized gas of a predetermined carbon-containing compound to cause a plurality of well aligned carbon nanotubes to be orderly grown quasi-vertically on the surface of the metal substrate through the growth film, the substrate formation step inserts the tips of carbon nanotubes into the molten metal substrate and solidifies thereafter the metal substrate, and substrate separation step separates carbon nanotubes from the growth substrate, to thereby manufacture well aligned carbon nanotubes.

In other words, the catalytic reaction between the catalyst forming the catalyst film and the vaporized gas of a predetermined carbon-containing compound causes the aligned growth of a plurality of carbon nanotubes quasi-vertically on the surface of the growth substrate, allowing the manufacture of the carbon nanotubes. Consequently, the well aligned carbon nanotubes can be manufactured with easier maintenance and control than the previous formation method of carbon nanotubes by dipping a silicon substrate in an alcohol solution.

Since a plurality of carbon nanotubes manufactured in this manner have one end being embedded in the metal substrate and are implanted quasi-vertically on the surface of the metal substrate, almost all of the carbon nanotubes are well aligned in the longitudinal direction and are orderly arranged in a quasi-parallel manner.

The growth substrate is a substrate formed from a material for suitably growing carbon nanotubes. Such materials for suitably growing carbon nanotubes include among others silicon (Si) and silicon compounds such as for example silicon carbide (SiC).

The catalyst film is a material which is necessary for causing the aligned growth of carbon nanotubes and which promotes the growth. The materials for the catalyst film include such as iron, iron oxide, cobalt, and nickel.

With the plurality of well aligned carbon nanotubes orderly arranged as such, an electric field can be applied in the longitudinal direction of almost all carbon nanotubes, and the electric field is concentrated at the tips of carbon nanotubes, so as to locally concentrate electrons thereto, allowing the electron emission at a high efficiency. In other words, the resistance becomes lower to facilitate the electric current to flow easier, thereby increasing the efficiency of electron emission.

Since one end of carbon nanotube is embedded in the metal substrate, the carbon nanotubes are immobilized within the metal substrate, thereby increasing the fixing force between the carbon nanotubes and the metal substrate to reduce the probability of dropout of the carbon nanotubes and to ultimately increase the durability.

By transplanting the well aligned carbon nanotubes orderly grown on a silicon substrate into a metal substrate, the silicon substrate can be reused, so that a growth substrate comprising expensive silicon can be used for a plurality of cycles, allowing the reduction of manufacturing cost.

The carbon nanotube manufacturing method in accordance with the third aspect of the present invention comprises:
a catalyst film formation step (e.g., catalyst film forming apparatus 200, step S302) for forming a catalyst film consisted of a predetermined catalyst on the surface of a predetermined growth substrate;
an aligned growth step (e.g., an aligned growth apparatus 300, step S303) for causing a catalytic reaction between said catalyst forming said catalyst film formed in said catalyst film formation step and the vaporized gas of a predetermined carbon-containing compound, to thereby cause a plurality of well aligned carbon nanotubes to be orderly grown quasi-vertically on the surface of said growth substrate;
a metal film vapor deposition step (e.g., a metal film vapor deposition apparatus 700, step S304) for vapor depositing a layer of predetermined metal film on the side having the tips of said well aligned carbon nanotubes grown in said aligned growth step;
a metal layer formation step (e.g., a metal layer plating apparatus 800, step S305) for forming a predetermined metal layer on said metal film formed in said metal film vapor deposition step; and
a substrate separation step (e.g., a substrate separator apparatus 600, step S306) for separating said carbon nanotubes from said growth substrate.

In accordance with the carbon nanotube manufacturing method of the third aspect of the present invention, the catalyst film formation step in the carbon nanotube manufacturing method forms a catalyst film on the surface of the predetermined growth substrate, the aligned growth step causes a catalytic reaction between the catalyst forming the catalyst film and the vaporized gas of the predetermined carbon-containing compound to thereby cause a plurality of well aligned carbon nanotubes to be orderly grown quasi-vertically on the surface of the metal substrate through the growth film, the metal film vapor deposition step vapor deposits a layer of a predetermined metal film on the side having the tips of carbon nanotubes, the metal layer formation step forms a predetermined metal layer on the metal film, the substrate separation step separates the carbon nanotubes from the growth substrate, to cause well aligned carbon nanotubes to be orderly grown.

In other words, the catalytic reaction between the catalyst forming the catalyst film and the vaporized gas of a predetermined carbon-containing compound causes the aligned growth of a plurality of carbon nanotubes quasi-vertically on the surface of the growth substrate, allowing the manufacture of the carbon nanotubes. Consequently, the well aligned carbon nanotubes can be manufactured with easier maintenance and control than the previous method of formation of carbon nanotubes by dipping a silicon substrate in an alcohol solution.

Since a plurality of carbon nanotubes manufactured in this manner have one end being embedded in the metal substrate and are implanted quasi-vertically on the surface of the metal substrate, almost all of the carbon nanotubes are well aligned in the longitudinal direction and are arranged in a quasi-parallel manner.

The growth substrate is a substrate formed from a material for suitably growing carbon nanotubes. Such materials for suitably growing carbon nanotubes include among others silicon (Si) and silicon compounds such as for example silicon carbide (SiC).

The catalyst film is a material which is necessary for the aligned growth of carbon nanotubes and which promotes the growth. The materials for the catalyst film include such as iron, iron oxide, cobalt, and nickel.

With the plurality of well aligned carbon nanotubes orderly arranged as such, an electric field can be applied in the longitudinal direction of almost all carbon nanotubes, and the electric field is concentrated at the tips of carbon nanotubes, so as to locally concentrate electrons thereto, allowing the electron emission at a high efficiency. In other words, the resistance becomes lower to facilitate the electric current to flow easier, thereby increasing the efficiency of electron emission.

Since one end of each carbon nanotube is embedded in the metal film of the metal substrate, the carbon nanotubes are immobilized within the metal substrate, thereby increasing the fixing force between the carbon nanotubes and the metal substrate to reduce the probability of dropout of the carbon nanotubes, ultimately increasing the durability.

By transplanting the well aligned carbon nanotubes orderly grown on a silicon substrate into a metal substrate, the growth substrate can be reused, so that the growth substrate comprising expensive silicon can be reused for a plurality of cycles, allowing the reduction of manufacturing cost.

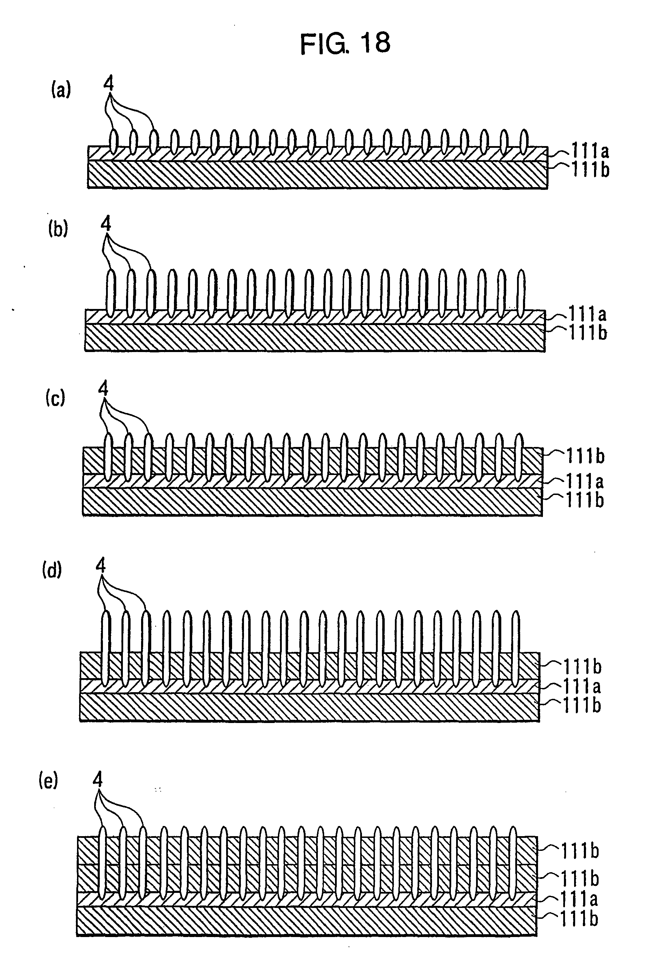

In addition, in the carbon nanotube manufacturing method in accordance with the present invention, the method may comprise:
a second step of aligned growth (e.g., the step shown in Figs. 18 (b) and 18 (d), where the aligned carbon nanotubes are orderly grown by the aligned growth apparatus 300) for causing the aligned growth of said carbon nanotubes separated from said growth substrate in said substrate separation step;
a second step of metal layer formation (e.g., the step shown in Figs. 18 (c) and 18 (e), where the metal layer is formed by the metal layer plating apparatus 800) for forming a predetermined metal layer on the side of well aligned carbon nanotubes orderly grown in said second step of aligned growth and on the surface of said metal film in which the rear end of each said carbon nanotubes is embedded;
a metal layer slicing step (e.g., the step shown in Fig. 18 (g)) for slicing said metal layer formed and laminated in said second step of metal layer formation in a direction perpendicular to the direction of aligned growth of said carbon nanotubes to thereby form a slice having a predetermined thickness; and
a metal layer removal step (e.g., the step shown in Figs. 18 (h) and 18 (i)) for removing a predetermined amount of metal layer of said slice formed in said metal layer slicing step in the direction of aligned growth of said carbon nanotubes to thereby expose a predetermined amount of said carbon nanotubes.

The metal layer which is laminated and formed by repeating the aligned growth of the carbon nanotubes and the metal layer formation is sliced in the direction perpendicular to the direction of the aligned growth of the carbon nanotubes in the metal layer slicing step to provide a slice having a predetermined thickness, and a predetermined amount of metal layer of the slice is removed in the direction of the aligned growth of the carbon nanotubes in the metal layer removal step to expose a predetermined amount of carbon nanotubes, thereby allowing the manufacture of well aligned carbon nanotubes.

In particular, the carbon nanotubes which are disposed in the metal film (metal layer) and which are formed in the substrate separation step are used as the seeds for growing well aligned carbon nanotubes, so that carbon nanotubes can be manufactured without using any growth substrate comprising expensive silicon, thereby allowing the reduction of manufacturing cost.

In the carbon nanotube manufacturing method in accordance with the present invention,
said aligned growth step may comprise:
an ionizing step (for example, a first step) for ionizing the vaporized gas of a predetermined carbon-containing compound;
an electric field application step (for example, a second step) for applying an electric field to the vaporized gas of said carbon-containing compound, the vaporized gas being ionized in said ionizing step; and
a heating step (for example, a third step) for heating said metal substrate or said growth substrate, and
wherein, in said electric field application step, an electric field may be applied to the vaporized gas of said carbon-containing compound to bring the vaporized gas of said carbon-containing compound into contact with said metal substrate or said growth substrate, to ultimately cause a plurality of well aligned carbon nanotubes to be grown quasi-vertically on the surface of said metal substrate or said growth substrate.

In the aligned growth step in the carbon nanotube manufacturing method, by applying an electric field in the electric field application step to the vaporized gas of the predetermined carbon-containing compound, the vaporized gas being ionized in the ionizing step, the vaporized gas of the predetermined carbon-containing compound is brought into contact with said metal substrate or said growth substrate heated in the heating step, to thereby cause the aligned growth of a plurality of carbon nanotubes quasi-vertically on the surface of the metal substrate or growth substrate.

More specifically, the vaporized gas of a predetermined carbon-containing compound, the vaporized gas being ionized, is brought into contact with the heated metal substrate or growth substrate due to the Coulomb force of the electric field to thereby react to form carbon nanotubes. The carbon nanotubes formed in this manner are alignedly grown in the direction of the electric field by the effect of the electric field, allowing the manufacture of well aligned carbon nanotubes.

### BRIEF DESCRIPTION OF THE DRAWINGS

Fig. 1 shows a schematic block diagram illustrating a carbon nanotube manufacturing apparatus in accordance with the first embodiment of the present invention;
Fig. 2 shows a schematic diagram illustrating the aligned growth apparatus in the carbon nanotube manufacturing apparatus in accordance with the present invention;
Fig. 3 shows a flow diagram illustrating the process steps of carbon nanotube manufacturing method in accordance with the first embodiment of the present invention;
Fig. 4 shows schematic diagrams illustrating the corresponding steps shown in Fig. 3;
Fig. 5 shows a schematic diagram illustrating a negative ion generator in the aligned growth apparatus;
Fig. 6 shows a schematic diagram illustrating an electric field generator in the aligned growth apparatus;
Fig. 7 shows a schematic diagram illustrating a high frequency heater in the aligned growth apparatus;
Fig. 8 shows a schematic diagram illustrating the aligned growth of carbon nanotubes;
Fig. 9 shows a schematic block diagram illustrating a carbon nanotube manufacturing apparatus in accordance with the second embodiment of the present invention;
Fig. 10 shows a flow diagram illustrating the process steps of carbon nanotube manufacturing method in accordance with the second embodiment of the present invention;
Fig. 11 shows schematic diagrams illustrating the corresponding steps shown in Fig. 10;
Fig. 12 shows a schematic diagram illustrating the manufacturing steps of carbon nanotubes in accordance with another example of the second embodiment of the present invention;
Fig. 13 shows a schematic diagram illustrating a member with the carbon nanotubes protruding from both sides of the metal substrate while extending through the metal substrate, Fig. 13 (a) shows the state prior to the protrusion, and Fig. 13 (b) shows the state after the protrusion;
Fig. 14 shows a schematic diagram illustrating the usage of carbon nanotube containing member shown in Fig. 13 (b);
Fig. 15 shows a schematic block diagram illustrating a carbon nanotube manufacturing apparatus in accordance with the third embodiment of the present invention;
Fig. 16 shows a flow diagram illustrating the manufacturing steps of carbon nanotube manufacturing method in accordance with the third embodiment of the present invention;
Fig. 17 shows schematic diagrams corresponding to the manufacturing steps shown in Fig. 16;
Fig. 18 shows a schematic diagram illustrating the manufacturing steps of the carbon nanotube manufacturing method in accordance with the fourth embodiment of the present invention; and
Fig. 19 shows a schematic diagram illustrating the manufacturing steps of the carbon nanotube manufacturing method in accordance with the fourth embodiment of the present invention.

### DETAILED DESCRIPTION OF THE PREFERRED EMBODIMENTS

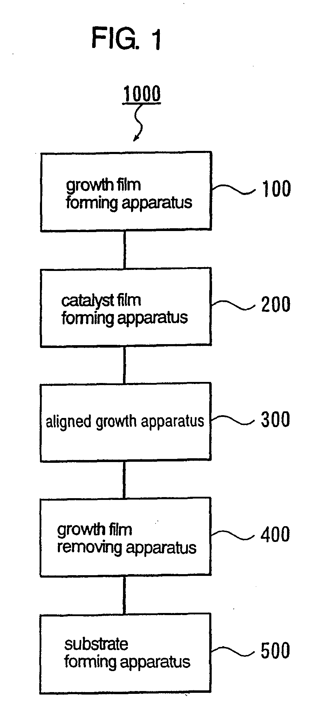

A detailed description of preferred embodiments of the present invention are described herein below with reference to the accompanying drawings in Fig. 1 to Fig. 19.

### [ first embodiment ]

Fig. 1 shows a schematic block diagram illustrating a carbon nanotube manufacturing apparatus in accordance with the first embodiment of the present invention.

As shown in Fig. 1, a carbon nanotube manufacturing apparatus 1000 comprises a growth film forming apparatus 100 for forming a silicon film 2, which is a growth film, as a silicon layer on the surface of a metal substrate 1, a catalyst film forming apparatus 200 for forming a catalyst film 3 on the surface of the silicon film 2, an aligned growth apparatus 300 for causing an aligned growth of a plurality of carbon nanotubes 4··· on the metal substrate 1 through the silicon film 2 by making use of the catalytic function of the catalyst film 3, a growth film removing apparatus 400 for removing the silicon film 2 and thereby disposing the carbon nanotubes 4··· on the surface of the metal substrate 1, and a substrate forming apparatus 500 for melting the metal substrate 1, embedding one end 4a of each of the carbon nanotubes 4··· disposed on the surface of the metal substrate 1 in the metal substrate 1, and implanting the carbon nanotubes 4··· in the metal substrate 1.

The growth film forming apparatus 100 may be for example a vapor deposition apparatus, which is an apparatus for forming the silicon film 2, used as the growth film, on the surface of the metal substrate 1.

The metal substrate 1 may be a plate-like member formed from a conductive material including such as copper, aluminium, chromium, and stainless steel.

The silicon film 2 formed on the surface of the metal substrate 1 by the growth film forming apparatus 100 may be a thin film that is formed by vapor deposition of n-type silicon to have a thickness in the order of a few nanometers to several hundreds nanometers.

The growth film is a film to be formed in order for the carbon nanotubes 4···, as is described hereinafter, to be suitably grown. Some exemplary materials which are used for the suitable growth of the carbon nanotubes 4··· include among others silicon (Si) and silicon compounds such as for example silicon carbide (SiC).

The catalyst film forming apparatus 200 may be for example one of the vacuum vapor deposition apparatus, molecular beam epitaxy (MBE) apparatus, ion plating apparatus, ion beam epitaxy apparatus, sputtering apparatus, and plating apparatus, which forms a growth substrate 50 by forming a catalyst film 3 on the surface of the silicon film 2 formed on the surface of the metal substrate 1.

The catalyst film 3 formed on the surface of the silicon film 2 by the catalyst film forming apparatus 200 may be a thin film formed by vapor depositing iron, iron oxide, cobalt, and nickel at the thickness of the order of a few nanometers to several hundreds nanometers.

These materials, such as iron, iron oxide, cobalt, and nickel, forming the catalyst film 3 are the materials which are necessary for the formation and the aligned growth of the carbon nanotubes 4···, as is described hereinafter, and which promote the growth thereof.

The aligned growth apparatus 300 is an apparatus for causing the aligned growth of a plurality of carbon nanotubes 4··· on the growth substrate 50, which apparatus causes the aligned growth of a plurality of carbon nanotubes 4··· on the metal substrate 1 through the silicon film 2.

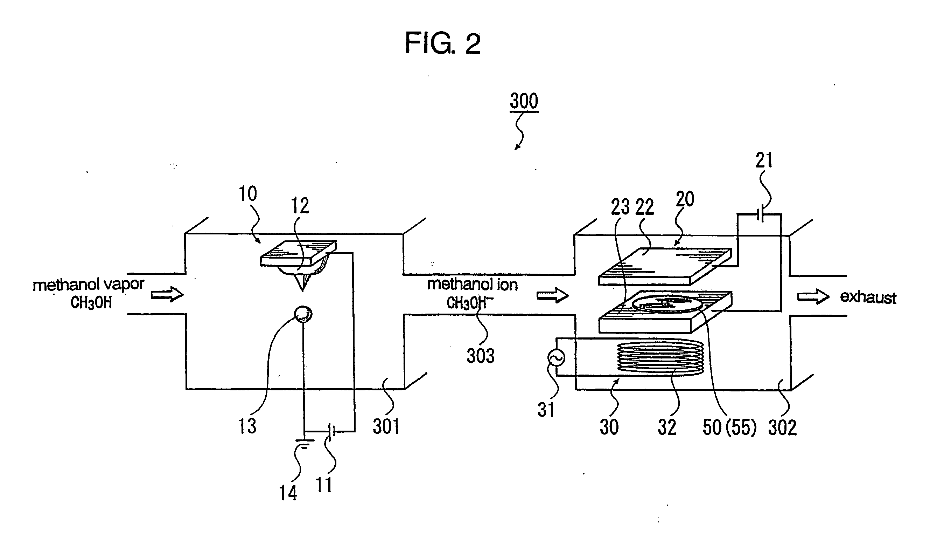

The aligned growth apparatus 300, as shown in Fig. 2, comprises a first chamber 301 and a second chamber 302, the internal spaces of both of which communicate with each other through a connecting part 303, and comprises a negative ion generator 10 serving as an ionizing means provided in the first chamber 301, an electric field generator 20 serving as an electric field generating means provided in the second chamber 302, and a high frequency heater 30 serving as a heating means.

The negative ion generator 10 comprises a direct-current power supply 11, a negative high-voltage electrode 12 connected to the negative electrode of the direct-current power supply 11, a ground electrode 13 connected to the positive electrode of the direct-current power supply 11.

The negative high-voltage electrode 12 and the ground electrode 13 are opposedly placed spaced apart at a predetermined distance. There is a ground 14 between the positive electrode of the direct-current power supply 11 and the ground electrode 13.

The negative ion generator 10, upon application of a direct-current voltage across the negative high-voltage electrode 12 and the ground electrode 13 by the direct-current supplied from the direct-current power supply 11, emits electrons from the negative high-voltage electrode 12 toward the ground electrode 13.

The electric field generator 20 comprises a direct-current power supply 21, a cathode electrode 22 connected to the negative electrode of the direct-current power supply 21, and an anode electrode 23 connected to the positive electrode of the direct-current power supply 21.

The cathode electrode 22 and the anode electrode 23 are opposedly disposed spaced apart at a predetermined distance.

The electric field generator 20, upon application of a direct-current voltage between the cathode electrode 22 and the anode electrode 23 by the direct-current supplied from the direct-current power supply 21, generates an electric field which extends from the upper surface of the anode electrode 23 toward the lower surface of the cathode electrode 22.

The anode electrode 23, as is described hererinafter, has also the function of a heater unit heated by the high frequency heater 30, and is formed from a material comprising a lamination or mixture of a magnetic substance and a conductive substance.

The anode electrode 23, in addition, as is described hereinafter, also has a function of a sample holder for mounting the growth substrate 50, in which the growth substrate 50 is mounted on the surface of the anode electrode 23 with the surface thereof opposing the cathode electrode 22.

The high frequency heater 30 comprises a high frequency power supply 31 and a coil 32 connected to the high frequency power supply 31.

The high frequency heater 30, upon application of alternate-current voltage to the coil 32 by the alternate-current supplied from the high frequency power supply 31, generates an alternate-current magnetic field in the coil 32 and generates high frequency electromagnetic waves around the coil 32.

The coil 32 of the high frequency heater 30 is disposed on the lower surface side of the anode electrode 23 of the electric field generator 20, which is the side opposing the cathode electrode 22, with the center axis of the coil 32 being perpendicular to the lower surface of the anode electrode 23. The electromagnetic waves generated in the coil 32 disposed at this location are adapted to be irradiated on the anode electrode 23 which is the heating unit.

The electromagnetic waves irradiated on the anode electrode 23 rapidly change their fluxes because the fluxes of the electromagnetic waves are concentrated by the magnetic substance included in the anode electrode 23. Due to the rapid change of flux, an eddy current is generated in the conductive substance included in the anode electrode 23. The eddy current flowing through the anode electrode 23 generates heat in the anode electrode 23 due to Joule heat to thereby increase the temperature of the anode electrode 23.

The growth film removing apparatus 400 may be for example an etching apparatus, which apparatus dissolves the silicon component dipped in a silicon dissolving solution contained in the etching apparatus. The silicon dissolving solution is a solution that selectively dissolves silicon.

The growth film removing apparatus 400 dissolves the silicon film 2 to dispose the carbon nanotubes 4··· having been disposed on the surface of the silicon film 2 on the surface of the metal substrate 1.

The substrate forming apparatus 500 is an apparatus for example for heating and melting a substrate and for cooling and solidifying the molten substrate.

The substrate forming apparatus 500 melts the metal substrate 1 so as to cause one end 4a of each of the carbon nanotubes 4··· disposed on the surface of the.metal substrate 1 to be submerged to a predetermined depth and then cools and solidifies the metal substrate 1, to thereby implant the carbon nanotubes 4··· in the metal substrate 1.

The carbon nanotube manufacturing method by means of the carbon nanotube manufacturing apparatus 1000 is described in greater details herein below.

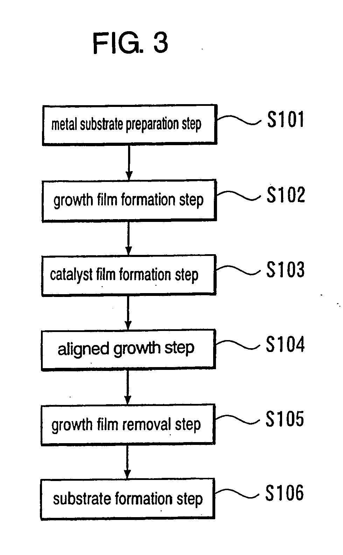

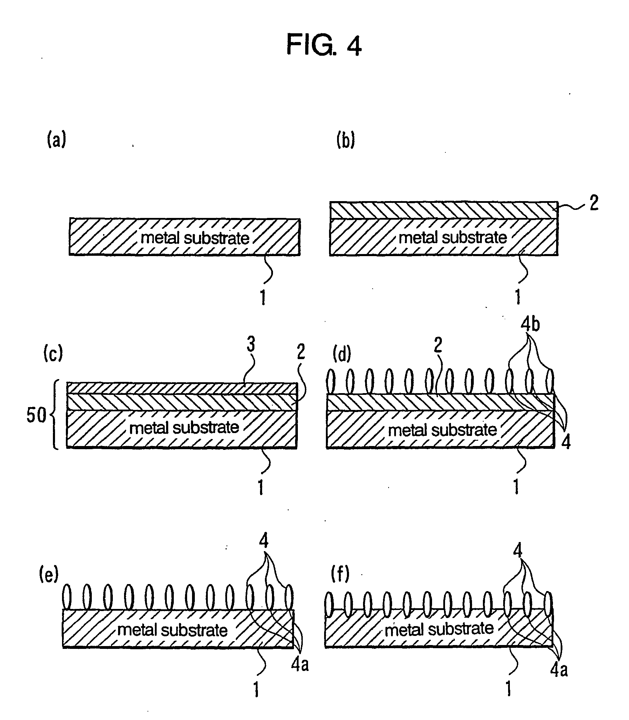

Fig. 3 shows a flow diagram illustrating the manufacturing steps of the carbon nanotube manufacturing method in accordance with the first embodiment of the present invention, and Fig. 4 shows schematic diagrams illustrating correspondingly the manufacturing processes (steps) shown in Fig. 3.

As shown in Fig. 3, the carbon nanotube manufacturing method in accordance with the first embodiment primarily comprises following six processes (six steps): a metal substrate preparation step (step S101) for preparing a metal substrate 1, a growth film formation step (step S102) for forming a silicon film 2 serving as the growth film on the surface of the metal substrate 1, a catalyst film formation step (step S103) for forming a catalyst film 3 on the surface of the formed silicon film 2, an aligned growth step (step S104) for causing the aligned growth of the carbon nanotubes 4··· on the surface of the metal substrate 1 through the silicon film 2 while the carbon nanotubes are trapping as the nuclei the catalyst particles forming the formed catalyst film 3, a growth film removal step (step S105) for removing the silicon film 2 to dispose the carbon nanotubes 4··· on the surface of the metal substrate 1, and a substrate formation step (step S106) for melting the metal substrate 1 to embed one end 4a of each of the carbon nanotubes 4··· disposed on the surface of the metal substrate 1 in the molten metal substrate 1 and thereafter solidifying the metal substrate 1.

The metal substrate preparation step in step S101 is a step for preparing the metal substrate 1 on which the carbon nanotubes 4··· are formed as shown in Fig. 4 (a).

The growth film formation step in step S102 is a step for forming the silicon film 2 serving as the growth film on the surface of the metal substrate 1 by means of the growth film forming apparatus 100, as shown in Fig. 4 (b).

The catalyst film formation step in step S103 is a step for further forming a catalyst film 3 on the surface of the silicon film 2 by means of the catalyst film forming apparatus 200, as shown in Fig. 4 (c). This step forms the growth substrate 50.

The aligned growth step in step S104 is a step for causing the aligned growth of the carbon nanotubes 4··· on the surface of the silicon film 2 by means of the aligned growth apparatus 300, as shown in Fig. 4 (d).

It should be noted here that the carbon nanotubes 4··· grow while trapping as the nuclei the particles of the substance forming the catalyst film 3 as nuclei.

The aligned growth step (S104) in the aligned growth apparatus 300 is described in greater details herein below.

The aligned growth step mainly comprises a first step where the vaporized gas (vapor) of a predetermined carbon-containing compound which is the raw material for forming the carbon nanotubes is negatively charged and the vaporized gas is negatively ionized; a second step where the vaporized gas of the carbon-containing compound, the vaporized gas being negatively charged, is supplied to between the anode electrode 23 and cathode electrode 22, with the electric field being applied across these electrodes; and a third step where the vaporized gas of carbon-containing compound, the vaporized gas being negatively charged, comes into contact with the growth substrate 50 mounted on the anode electrode 23, to thereby cause the aligned growth of carbon nanotubes 4···.

The predetermined carbon-containing compound as the material for forming the carbon nanotubes is for example an organic substance containing carbon (C), and includes, for example, methanol, ethanol, 1-butanol, 1-octanol, etc. In the present embodiment, an example is described which uses methanol as the predetermined carbon-containing compound (organic substance).

On the upper surface of the anode electrode 23 of the electric field generator 20 serving as a sample stage, the silicon film 2 having a catalyst film 3 formed in the catalyst film formation step of the step S103 (growth substrate 50) is mounted.

Then, the air in the first chamber 301, the second chamber 302, and the connecting part 303 of the aligned growth apparatus 300 shown in Fig. 2 is removed by means of a vacuum pump, and then an inert gas (such as argon) is fed into the first chamber 301, the second chamber 302, and the connecting part 303 to fill the apparatus with the inert gas so as to perform the gas flushing.

Next, methanol vapor M···, which is a vaporized gas obtained by heating or by placing under a high vacuum the methanol stored in a storage tank not shown in the figure, is fed to the first chamber 301.

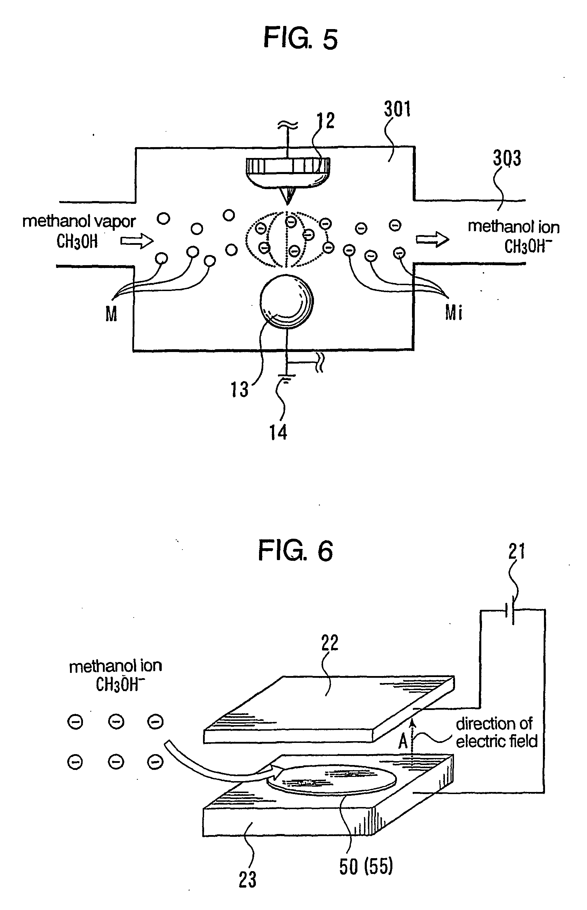

The methanol vapor M··· fed to the first chamber 301 passes between the negative high-voltage electrode 12 and the ground electrode 13 of the negative ion generator 10, as shown in Fig. 5. When the methanol vapor M··· passes between the negative high-voltage electrode 12 and the ground electrode 13 of the negative ion generator 10, electrons emitted from the negative high-voltage electrode 12 collide with the methanol vapor M··· to cause the methanol vapor M··· to be negatively charged to ultimately become methanol ions Mi···. Although negatively charged methanol ions Mi··· are drawn to the ground electrode 13, they are pushed out from the first chamber 301 by the methanol vapor M··· which follows. This is the first step.

The methanol ions Mi··· then pass through the connecting part 303 to second chamber 302.

Next, the methanol ions Mi··· fed into the second chamber 302 passes between the cathode electrode 22 and the anode electrode 23 of the electric field generator 20, as shown in Fig. 6. During this step, the electric field generator 20 applies an electric field extending from the anode electrode 23 toward the cathode electrode 22 (the electric field in the direction of the arrow A in Fig. 6). This is the second step.

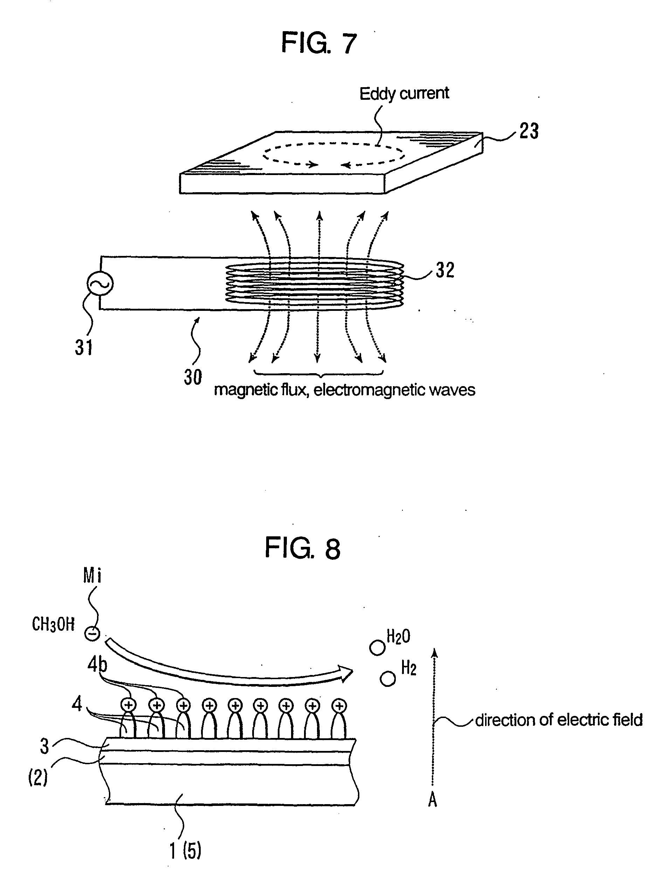

As shown in Fig. 7, the high frequency electromagnetic waves output from the high frequency heater 30 generates an eddy current in the anode electrode 23 to heat the anode electrode 23 to a high temperature (for example, 600 to 1200 degrees centigrade). The growth substrate 50 mounted on the upper surface of the anode electrode 23 also is heated through the anode electrode 23 to a similarly high temperature.

The methanol ions Mi··· fed to between the cathode electrode 22 and the anode electrode 23 of the electric field generator 20 are negatively charged, so that the effect of electric field extending from the anode electrode 23 to the cathode electrode 22, namely the Coulomb force, draws ions toward the anode electrode 23. The methanol ions Mi··· drawn up to the growth substrate 50 mounted on the anode electrode 23 come into contact with the catalyst film 3 formed on the metal substrate 1 of the growth substrate 50. Since the metal substrate 1 as well as the catalyst film 3 of the growth substrate 50 are heated to a high temperature (e.g., 600 to 1200 degrees centigrade) by the high frequency heater 30 through the anode electrode 23, the methanol ions Mi··· are pyrolyzed on the growth substrate 50 (the catalyst film 3). The reaction time of the pyrolysis is preferably about thirty minutes, and the more preferable reaction time is not less than thirty minutes. As shown in Fig. 8, the carbons contained in the methanol ions Mi··· are left behind on the metal substrate 1 (the catalyst film 3) of the growth substrate 50, while the water (H₂O) and hydrogen (H₂) produced during the pyrolysis are exhausted out of the apparatus (the second chamber 102).

It should be noted here that the preferred condition for the reaction efficiency is such that the methanol ions Mi··· are pyrolyzed on the surface of the growth substrate 50 and fed according to the reaction rate of the formation of carbon nanotubes 4···. It is also preferable in view of safety with respect to the maintenance and control of the apparatus such that excess methanol ions Mi··· more than required are not supplied.

The iterative repetition of pyrolysis of the methanol ions Mi··· provides the accumulation of carbons on the metal substrate 1 (the catalyst film 3) of the growth substrate 50. The accumulated carbons trap as catalyst the particles of iron and the like, which form the catalyst film 3, to thereby form the carbon nanotubes 4···. This is the third step.

To induce the chemical reaction of the carbon with the catalyst, the energy level of the electrons in the outermost shell should be increased, so that the reaction under a high temperature environment as have been described above (the carbon nanotubes formation step) is necessary.

The silicon film 2 of the growth substrate 50 on which the carbon nanotubes 4··· are formed is positively charged by the direct-current power supply 21 through the anode electrode 23, so that the carbon nanotubes 4··· are also positively charged. There is applied, between the cathode electrode 22 and the anode electrode 23, an electric field extending from the anode electrode 23 to the cathode electrode 22 (the electric field in the direction of the arrow A in Fig. 6 and in Fig. 8), the tips 4b of the carbon nanotubes 4··· are drawn toward the upper side of the cathode electrode 22. The effect of the electric field causes the carbon nanotubes 4···to be formed and grown while the tips 4b thereof are being pulled upwardly. This causes the aligned growth of the carbon nanotubes 4··· quasi-vertically from the growth substrate 50. The carbon nanotubes 4···, during this step, grow while trapping the catalyst particles which form the catalyst film 3.

Since the direction of the aligned growth of the carbon nanotubes 4···. is in the direction of the electric field extending from the anode electrode 23 toward the cathode electrode 22, the carbon nanotubes 4··· are aligned and grown in the direction normal to the metal substrate 1 of the growth substrate 50, if the growth substrate 50 is disposed perpendicularly to the electric field.

As can be seen from the foregoing, the aligned growth of the carbon nanotubes 4··· is effectuated on the metal substrate 1 of the growth substrate 50 in step S104.

The growth film removal step in step S105 is a step for removing the silicon film 2 serving as the growth film by the growth film removing apparatus 400, as shown in Fig. 4 (e).

When the silicon film 2 is dissolved and removed by the silicon dissolving solution contained in the growth film removing apparatus 400, the carbon nanotubes 4··· formed on the metal substrate 1 through the silicon film 2 are arranged and disposed on the surface of the metal substrate 1.

By slowly dissolving the silicon film 2 with the silicon dissolving solution as described above, the carbon nanotubes 4··· on the silicon film 2 gradually fall and settle on the metal substrate 1, so that the carbon nanotubes 4··· are arranged and disposed on the surface of the metal substrate 1, with the form of aligned growth being maintained.

The substrate formation step in the step S106 is a step for embedding one end 4a of each of the carbon nanotubes 4··· disposed on the surface of the metal substrate 1 in the metal substrate 1 to implant the carbon nanotubes 4··· in the metal substrate 1, as shown in Fig. 4 (f), by the substrate forming apparatus 500.

When the metal substrate 1 is formed from for example copper (Cu), the substrate forming apparatus 500 heats and melts the metal substrate 1 to its melting point (approximately 1084 degrees centigrade) or over, so as to submerge and embed to a predetermined depth one end 4a of each of the carbon nanotubes 4··· disposed on the surface of the metal substrate 1. Then the substrate forming apparatus 500 cools the metal substrate 1 and solidifies the metal substrate 1 to fix and implant the carbon nanotubes 4··· in the metal substrate 1.

The carbon nanotubes 4··· implanted on the metal substrate 1 have a diameter of a few nanometers to over ten nanometers and a length of 1 micrometer to several tens micrometers, and they are formed in the order of a million to ten billions per each square millimeter (mm²).

As can be appreciated from the foregoing description, the carbon nanotube manufacturing method by using the carbon nanotube manufacturing apparatus 1000 in accordance with the present invention, the methanol ions Mi···, which are obtained by negatively charging methanol vapor M··· by the negative ion generator 10, are pyrolyzed on the surface of the growth substrate 50 placed within an electric field, so as to cause the aligned growth of the carbon nanotubes 4··· on the surface of the metal substrate 1 of the growth substrate 50 to thereby form and manufacture the carbon nanotubes 4···. Thus, well aligned carbon nanotubes 4··· can be arranged and disposed on the metal substrate 1.

In accordance with the present invention, the formation of carbon nanotubes within an electric field easily allows the well aligned growth of carbon nanotubes.

Methanol, the raw material for carbon nanotubes, is stored in a storage reservoir not shown in the figure. Only the methanol ions Mi··· required for forming the carbon nanotubes 4··· by pyrolysis are fed to the anode electrode 23 and the growth substrate 50 both having been heated to a high temperature, so that the maintenance and control of the apparatus is facilitated in preventing the explosion and fire caused by the excessively fed methanol. In particular, since the gas within the apparatus is replaced with an inert gas, methanol is never mixed with air (oxygen), making it much safer than ever.

The methanol ions Mi··· to be pyrolyzed on the surface of the growth substrate 50 are fed according to the reaction rate of forming the carbon nanotubes 4···, allowing the carbon nanotubes 4··· to be manufactured at a high production efficiency.

The carbon nanotubes 4··· manufactured in this manner have one ends 4a each being embedded in the metal substrate 1, and are implanted quasi-vertically on the surface of the metal substrate 1, so that the well aligned carbon nanotubes 4··· are arranged in quasi-parallel to the longitudinal direction. With a plurality of carbon nanotubes 4··· being well aligned as such, an electric field can be applied in the longitudinal direction of almost all of the carbon nanotubes 4···, and the electric field is concentrated at the tips of the carbon nanotubes 4· · · , thus the electrons are locally concentrated thereto, allowing the electron emission at a high efficiency and lowering the resistance value to facilitate the electric current to flow easily, to thereby increase the electron emission efficiency. In other words, the carbon nanotubes 4... can be suitably used for such as the electron emission electrodes which emits electrons.

### [ second embodiment ]

The second embodiment in accordance with the present invention is described in greater details herein below. The same reference numerals are used for the same elements as those of the first embodiment, and only the different elements are described in details.

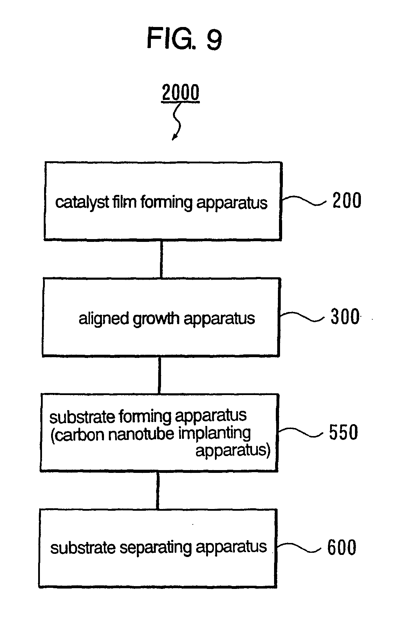

Fig. 9 shows a schematic block diagram illustrating a carbon nanotube manufacturing apparatus in accordance with the second embodiment of the present invention.

As shown in Fig. 9, the carbon nanotube manufacturing apparatus 2000 includes a catalyst film forming apparatus 200 for forming a catalyst film 3 on the surface of a silicon substrate 5, which is a silicon layer, to form a growth substrate 55, an aligned growth apparatus 300 for using the catalytic function of the catalyst film 3 to cause the aligned growth of a plurality of carbon nanotubes 4··· on the growth substrate 55 (the silicon substrate 5), a substrate forming apparatus 550 for inserting the tips 4b of the carbon nanotubes 4··· alignedly grown on the surface of the growth substrate 55 (the silicon substrate 5) into the molten metal substrate 1A to implant the carbon nanotubes 4··· in the metal substrate 1A, and a substrate separating apparatus 600 for separating the carbon nanotubes 4··· from the silicon substrate 5.

The substrate forming apparatus 550 is an apparatus for heating and melting the metal substrate 1A and for cooling and solidifying the metal substrate 1A, as well as an apparatus for embedding the tips 4b of the carbon nanotubes 4··· grown on the surface of the silicon substrate 5 in the molten metal substrate 1A to implant the carbon nanotubes 4··· in the metal substrate 1A.

The substrate separating apparatus 600 is an apparatus for separating the carbon nanotubes 4··· from the silicon substrate 5, and for disposing the carbon nanotubes 4··· on the metal substrate 1A.

The carbon nanotube manufacturing method in the carbon nanotube manufacturing apparatus 2000 is described in greater details herein below.

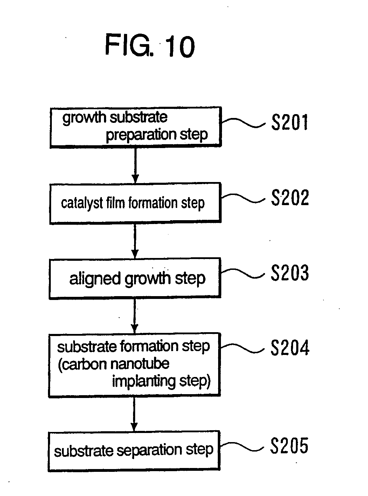

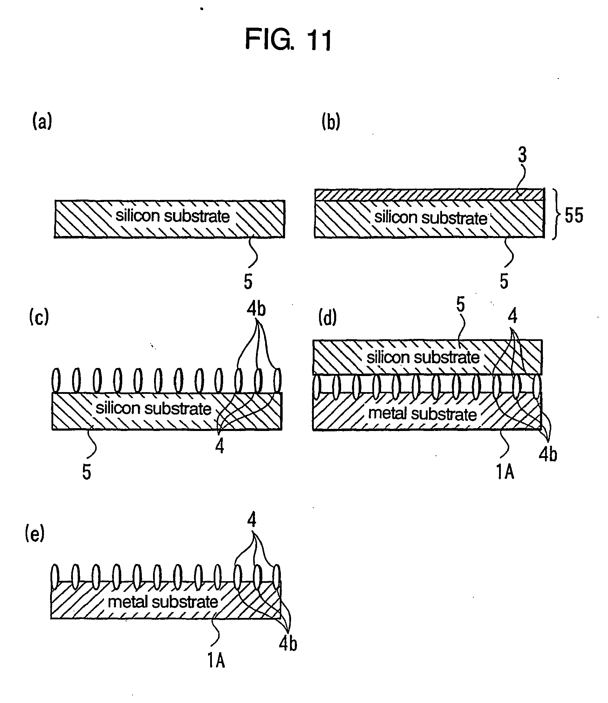

Fig. 10 shows a schematic flow diagram illustrating the manufacturing steps of the carbon nanotube manufacturing method in accordance with the second embodiment of the present invention, and Fig. 11 shows a series of schematic diagrams corresponding to the manufacturing steps shown in Fig. 10.

As shown in Fig. 10, the carbon nanotube manufacturing method in accordance with the second embodiment mainly comprises following five processes (five steps): a growth substrate preparation step (step S201) for preparing a silicon substrate 5, a catalyst film formation step (step S202) for forming a catalyst film 3 on the silicon substrate 5, an aligned growth step (step S203) for causing the aligned growth of the carbon nanotubes 4··· on the surface of the silicon substrate 5 while the carbon nanotubes are trapping as the nuclei the catalyst particles which form the formed catalyst film 3, a substrate forming step (step S204) for inserting the tips 4b of the carbon nanotubes 4··· alignedly grown on the surface of the silicon substrate 5 into the molten metal substrate 1A and thereafter solidifying the metal substrate 1A, and a substrate separation step (step S205) for separating the carbon nanotubes 4··· from the silicon substrate 5.

The growth substrate preparation step in step S201 is a step for preparing the silicon substrate 5 for forming the carbon nanotubes 4···, as shown in Fig. 11 (a).

The silicon substrate 5 may be a plate-like member made of for example an n-type silicon.

The catalyst film formation step in step S202 is a step for forming the catalyst film 3 on the surface of the silicon substrate 5 by the catalyst film forming apparatus 200, to thereby form the growth substrate 55, as shown in Fig. 11 (b).

The aligned growth step in step S203 is a step for causing the aligned growth of the carbon nanotubes 4··· on the surface of the silicon substrate 5 of the growth substrate 55 by the aligned growth apparatus 300, as shown in Fig. 11 (c).

The carbon nanotubes 4··· are alignedly grown and formed by the aligned growth apparatus 300 shown in Fig. 2.

The aligned growth method of the carbon nanotubes 4··· in the aligned growth step is generally similar to the step S104 of the first embodiment, and the aligned growth apparatus 300 also is identical, so that the detailed description is omitted here.

The substrate formation step in step S204 is a step for inserting the tips 4b of the carbon nanotubes 4··· alignedly grown on the surface of the silicon substrate 5 into the metal substrate 1A and then solidifying the metal substrate 1A thereafter, as shown in Fig. 11 (d), by the substrate forming apparatus 550.

The metal substrate 1A may be made of a conductive material such as for example copper, aluminum, chrome, stainless steel, and the like.

When the metal substrate 1A is made of for example copper, the substrate forming apparatus 550 heats the metal substrate 1A to its melting point (approximately 1084 degrees centigrade) or over and melts it, so as to submerge the tips 4b of the carbon nanotubes 4··· alignedly grown on the surface of the silicon substrate 5 in the aligned growth step (S203) to a predetermined depth. Then, the substrate forming apparatus 550 cools the metal substrate 1A and solidifies the metal substrate 1A to thereby fix and implant the carbon nanotubes 4··· in the metal substrate 1A. This substrate formation step may be also called as a carbon nanotube implanting step, and the substrate forming apparatus 550 may be also called as a carbon nanotube implanting apparatus.

The substrate separation step in step S205 is a step for separating the carbon nanotubes 4··· from the silicon substrate 5 by the substrate separating apparatus 600,to thereby arrange and dispose the carbon nanotubes 4... on the metal substrate 1A, as shown in Fig. 11 (e).

As for the method of separating the carbon nanotubes 4··· from the silicon substrate 5, there is a method, for instance, in which the silicon substrate 5 is heated by the heater device serving as the substrate separating apparatus 600, to cause the carbon nanotubes 4··· to be pulled out of the silicon substrate 5.

As for the method of separating the carbon nanotubes 4··· from the silicon substrate 5, there is a method, for instance, in which a laser radiation device serving as the substrate separating apparatus 600 irradiates a laser beam to the carbon nanotubes 4··· at a point near the silicon substrate 5, to thereby cut the carbon nanotubes 4···.

As for the method of separating the carbon nanotubes 4··· from the silicon substrate 5, there is a method, for instance, in which a magnet (electromagnet or permanent magnet) serving as the substrate separating apparatus 600 may be used to pull the iron dispersed in the silicon substrate 5 as the catalyst or the iron dispersed for the separation toward the magnet, to thereby exert a force to the silicon substrate 5 to separate the carbon nanotubes 4··· therefrom.

The carbon nanotubes 4··· implanted in the metal substrate 1A have a diameter of a few nanometers to over ten nanometers and a length of 1 micrometer to several tens micrometers, and they are formed in the order of a million to ten billions per each square millimeter (mm²).

In accordance with the carbon nanotube manufacturing method of the present embodiment, the negatively charged methanol ions Mi··· obtained by negatively charging the methanol vapor M··· using the negative ion generator 10 are pyrolyzed on the surface of the silicon substrate 5 of the growth substrate 55 placed within an electric field, to cause an aligned growth of the carbon nanotubes 4··· on the surface of the silicon substrate 5, then implant them in the metal substrate 1A to form and manufacture the carbon nanotubes 4···. In accordance with the present invention, the formation of carbon nanotubes within an electric field easily allows the well aligned growth of the carbon nanotubes.

In particular, since the carbon nanotubes 4··· alignedly grown on the surface of the silicon substrate 5 are implanted and transplanted in the metal substrate 1A, an expensive silicon substrate 5 can be reused for a plurality of cycles, allowing the reduction of manufacturing cost.

The methanol ions Mi··· to be pyrolyzed on the surface of the silicon substrate 5 of the growth substrate 50 are fed according to the reaction rate of formation of the carbon nanotubes 4···, allowing the manufacturing of carbon nanotubes 4··· at a high production efficiency, while on the other hand since only the required amount of methanol ions Mi··· for forming the carbon nanotubes 4··· is fed to the anode electrode 23 and the metal substrate 1 both having been heated to a high temperature, it is safer and easier with respect to the maintenance and control of the apparatus in preventing the explosion and fire caused by the excessively fed methanol.

Another modification of the second embodiment is described in greater details herein below.

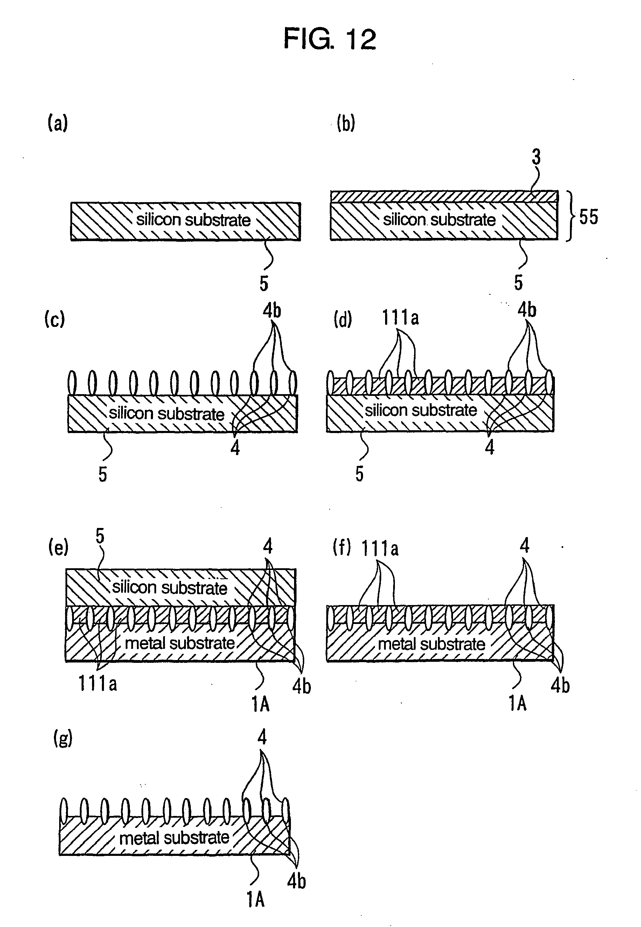

Fig. 12 shows a schematic diagram illustrating the carbon nanotube manufacturing steps in accordance with another modification of the second embodiment.

As shown in Fig. 12, the carbon nanotube manufacturing method in accordance with the another modification of the second embodiment mainly comprises following seven steps: a growth substrate preparation step (Fig. 12 (a)) for preparing the silicon substrate 5, a catalyst film formation step (Fig. 12 (b)) for forming a catalyst film 3 on the surface of the silicon substrate 5, an aligned growth step (Fig. 12 (c)) for causing an aligned growth of the carbon nanotubes 4··· on the surface of the silicon substrate 5 while the carbon nanotubes 4··· are trapping as the nuclei the catalyst particles which form the formed catalyst film 3, a metal film vapor deposition step (Fig. 12 (d)) for vapor depositing a metal film 111a that covers around the sides of the alignedly grown carbon nanotubes 4· · · , a substrate formation step (Fig. 12 (e)) for inserting the tips 4b of the carbon nanotubes 4··· into the molten metal substrate 1A and then solidifying the metal substrate 1A thereafter, a substrate separation step (Fig. 12 (f)) for separating the carbon nanotubes 4··· from the silicon substrate 5, and metal film removal step (Fig. 12 (g)) for removing the metal film 111a.

The growth substrate preparation step shown in Fig. 12 (a) is a step for preparing the silicon substrate 5 on which the carbon nanotubes 4··· is formed.

The silicon substrate 5 may be a plate-like member made of for example an n-type silicon.

The catalyst film formation step shown in Fig. 12 (b) is a step for forming the catalyst film 3 on the surface of the silicon substrate 5 by the catalyst film forming apparatus 200, to thereby form the growth substrate 55.

The aligned growth step shown in Fig. 12 (c) is a step for causing the aligned growth of the carbon nanotubes 4··· on the surface of the silicon substrate 5 of the growth substrate 55 by the aligned growth apparatus 300.

The carbon nanotubes 4··· are alignedly grown and formed by the aligned growth apparatus 300 shown in Fig. 2.

Since the method of aligned growth of the carbon nanotubes 4··· in the aligned growth step is generally similar to the step S104 of the first embodiment and the aligned growth apparatus 300 is identical with that used therein, the detailed description is omitted here.

The metal film vapor deposition step shown in Fig. 12 (d) is a step for vapor depositing a metal film 111a around the sides of the carbon nanotubes 4··· as well as on the surface of the silicon substrate 5 by using for example a metal film vapor deposition apparatus. The metal film deposition apparatus is similar to the catalyst film forming apparatus 200, and may be for example one of the vacuum vapor deposition apparatus, molecular beam epitaxy (MBE) apparatus, ion plating apparatus, ion beam epitaxy apparatus, sputtering apparatus, and plating apparatus.

The metal film vapor deposition apparatus deposits, on the surface side of the silicon substrate 5, a metal film 111a having a thickness of a few nanometers to several hundreds nanometers and being made of a conductive metal including such as for example aluminum, copper, silver, and nickel.

The metal film 111a does not completely cover the carbon nanotubes 4···, rather the tips 4b of the carbon nanotubes 4··· protrude from the surface of the metal film 111a.

The substrate formation step shown in Fig. 12 (e) uses the substrate forming apparatus 550 to insert the tips 4b of the carbon nanotubes 4··· alignedly grown on the surface of the silicon substrate 5 into the molten metal substrate 1A, then to solidify the metal substrate 1A to implant the carbon nanotubes 4··· in the metal substrate 1A . The metal substrate 1A is made of a conductive material including such as for example copper, aluminum, chrome, stainless steel, and the like.

The metal film vapor deposition step for covering the carbon nanotubes 4··· with the metal film 111a is preliminarily employed so as to facilitate the bonding of the carbon nanotubes 4··· to the molten metal substrate 1A. This phenomenon is similar to the so-called wetting phenomenon in such as soldering. Once, even when it is only once, a metal is attached on the carbon nanotubes 4··· due to such as vapor deposition, the molten metal substrate 1A is facilitated to easily bond to the carbon nanotubes 4···. By making use of this phenomenon, the carbon nanotubes 4··· are suitably implanted in the metal substrate 1A.

The substrate separation step shown in Fig. 12 (f) is a step for separating the carbon nanotubes 4··· from the silicon substrate 5 to dispose the carbon nanotubes 4··· on the metal substrate 1A by using the substrate separating apparatus 600. The step is similar to that in the second embodiment and the detailed description is omitted here.

The metal film removal step shown in Fig. 12 (g) is a step for removing the metal film 111a by using a metal film remover apparatus.

The metal film removing apparatus is for example an apparatus for melting the metal film 111a, which apparatus selectively melts the metal film 111a by using a metal film dissolving solution (such as for example hydrochloric acid, nitric acid, sulfuric acid) stored in the metal film removing apparatus.

As for the metal film dissolving solution, it is preferable to use a dissolving solution which selectively dissolves the metal film 111a according to the combination of the metal which forms the metal substrate 1A and the metal which forms the metal film 111a. It is also preferable to prepare the dissolving solution by paying a due attention to the metal which forms the metal film 111a and the metal which forms the metal substrate 1A.

The carbon nanotubes 4··· implanted in the metal substrate 1A have for example a diameter of a few nanometers to over ten nanometers and a length of 1 micrometer to several tens micrometers, and they are formed in the order of a million to ten billions per each square millimeter (mm²).

The well aligned carbon nanotubes can be easily grown by such a carbon nanotube manufacturing method as has been described above. The well aligned carbon nanotubes 4··· can be orderly arranged and disposed on the metal substrate 1A.

Although the metal substrate 1A shown in Fig. 12 (g) has the carbon nanotubes 4··· being disposed on one side of the metal substrate 1A with the carbon nanotubes 4··· being exposed from the one side, the carbon nanotubes 4··· may also be formed on both sides of the metal substrate 1A with the carbon nanotubes 4··· being exposed from the both sides.

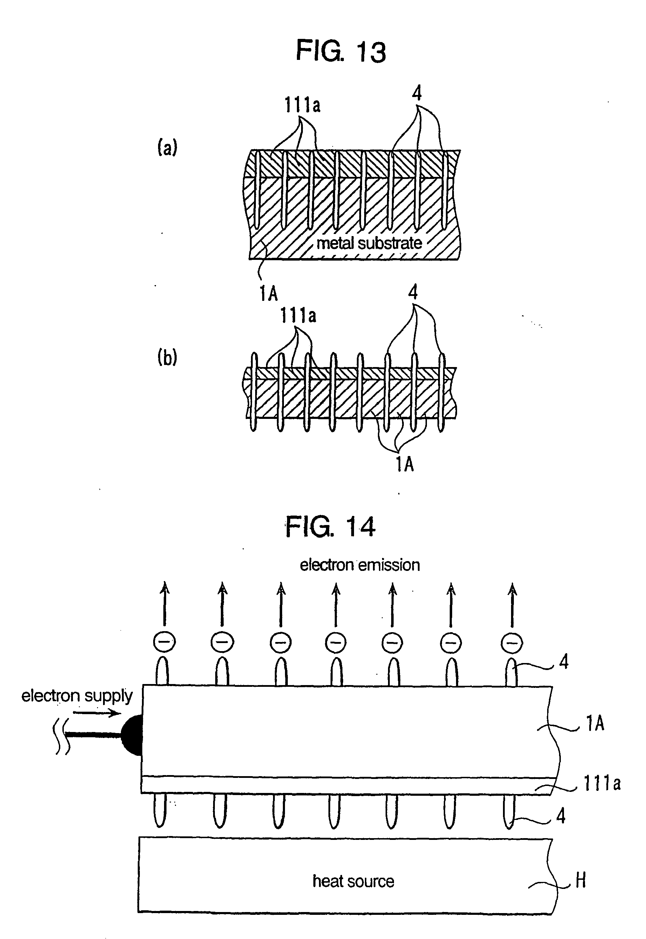

For instance, a member having carbon nanotubes 4··· embedded across two layers of metal substrate 1A and metal film 111a shown in Fig. 13 (a), as has been formed in the substrate separation step (c.f., Fig. 12 (f)) of the carbon nanotube manufacturing method in accordance with the another modification of the second embodiment of the present invention, can be dipped in a predetermined dissolving solution (for example, hydrochloric acid, nitric acid, sulfuric acid) to dissolve a predetermined amount of the metal substrate 1A and the metal film 111a to obtain the carbon nanotubes 4··· being exposed from both sides of the metal substrate 1A, as shown in Fig. 13 (b). The carbon nanotubes 4··· extend through the metal substrate 1A to be exposed from both sides thereof.

The extent of exposure of the carbon nanotubes 4··· from the surface of the metal substrate 1A may be adjusted by the degree of dissolving the metal substrate 1A and metal film 111a. The carbon nanotubes 4··· protrude and are exposed by a suitable length from the surface of the metal substrate 1A.

The dissolving solution may be a solution which dissolves both the metal substrate 1A and the metal film 111a, or may be a series of solutions each of which dissolves the metal substrate 1A and metal film 111a respectively.

The application field of the member having carbon nanotubes 4··· being exposed from both sides of the metal substrate 1A as shown in Fig. 13 (b) is described herein below.

The carbon nanotube 4 is known as a material which emits electrons e within an electric field, and may be used as the electron emission electrode.

The phenomenon of electron emission is generally referred to as electron field emission, in which, when a strong electric field is applied to a solid surface, the potential barrier of the surface that traps the electrons within the solid body becomes lower and thinner, so that the electrons are emitted into a vacuum due to the tunneling effect. In particular, when a substance having a small radius of curvature is placed in an electric field, the charges are concentrated at the pointed area having a smaller radius of curvature, facilitating the emission of electrons. This phenomenon is referred to as tip concentration phenomenon of charges, which is well known in the field of discharge engineering. A substance having a diamond structure in particular has a negative electron affinity, being capable of facilitating the emission of conduction electrons.

Substances having such diamond structure include a substance mainly formed from carbon atoms, such as carbon nanotubes 4. Since the carbon nanotube 4 is a substance having a small diameter, the electrons within a carbon nanotube 4 are concentrated at the area nearest to the positive potential due to the Coulomb force, because of the tip concentration phenomenon of charges. If the electric field applied to the carbon nanotube 4 is larger than the threshold value of electron emission, then a part of electrons having being concentrated at the tip of carbon nanotube 4 having a smaller radius of curvature are emitted into the space. Since the carbon nanotube 4 is an extremely thin tube-like substance having a diameter of a few nanometers, electrons can be emitted even in a weak electric field.

The amount of electron emission from the carbon nanotubes 4 increases exponentially in proportion to their surface temperature. To cause a large amount of electrons to be emitted from the carbon nanotubes 4, the temperature of the carbon nanotubes 4 needs to be raised by means of a heat source H as shown in Fig. 14, so as to increase the energy of the electrons inside the carbon nanotubes 4. Since the heat is conducted extremely fast through the carbon nanotubes 4, the electron emission efficiency can be increased by directly conducting the heat to the carbon nanotubes 4 than by indirectly conducting the thermal energy to the carbon nanotubes 4 from the heat source H through the metal film 111a or the metal substrate 1A. Accordingly, the most suitable structure for the electron emission electrode is such that the carbon nanotubes 4 are exposed and protruding from both sides of the electrodes while extending therethrough, as shown in Fig. 14.

As shown in Fig. 14, when the carbon nanotubes 4 being exposed from the surface of the metal film 111a is directly heated by a heat source H to emit electrons from the carbon nanotubes 4 being exposed from the surface of the metal substrate 1A, the thermal energy is converted to the kinetic energy of electrons at a higher efficiency. To sustain the electron emission from the tips of the carbon nanotubes 4, it is required for the electrons to be supplied to the carbon nanotubes 4 by way of the metal substrate 1A. The electrons to be supplied are those electrons which originated from the electrons emitted from the carbon nanotubes 4 and which routed back through the electron collector electrode and load resistance to the electron emission electrode. When the electron emission and the electron supply, as shown in Fig. 14, are continuously repeated, the electrons circulate and do not dissipate. The kinetic energy of electrons is released to the outside as the thermal energy when the electrons pass through the load resistance, while at the same time the thermal energy corresponding to the dissipated energy is supplied from the heat source H, thus the energy conservation law is satisfied.

As the heat source, any waste heat including the thermal energy produced from the engine of a motor vehicle and the thermal energy produced when the garbage is burnt in an incinerator can be effectively used. A technology that makes use of such waste heat energy is the technology required to sustain the earth environment.

### [ third embodiment ]

The third embodiment in accordance with the present invention is described in greater details herein below. The same reference numerals are used for the same elements as those of the first and second embodiments, and only the different elements are described in details.

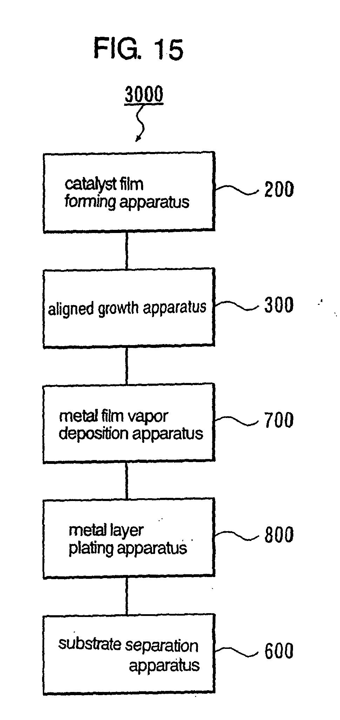

Fig. 15 shows a schematic block diagram illustrating a carbon nanotube manufacturing apparatus in accordance with the third embodiment of the present invention.

As shown in Fig. 15, the carbon nanotube manufacturing apparatus 3000 includes a catalyst film forming apparatus 200 for forming a catalyst film 3 on the surface of a silicon substrate 5 which is a silicon layer, to thereby form a growth substrate 55, an aligned growth apparatus 300 for using the catalytic function of the catalyst film 3 to cause the aligned growth of a plurality of carbon nanotubes 4... on the growth substrate 55 (silicon substrate 5), a metal film vapor depositing apparatus 700 for vapor depositing a metal film 111a on the side having the tips 4b of the alignedly grown carbon nanotubes 4· · · , a metal layer plating apparatus 800 for plating further a metal layer 111b on the vapor deposited metal film 111a, and a substrate separator apparatus 600 for separating the carbon nanotubes 4··· from the silicon substrate 5.

The carbon nanotube manufacturing method using the carbon nanotube manufacturing apparatus 3000 is described in greater details herein below.

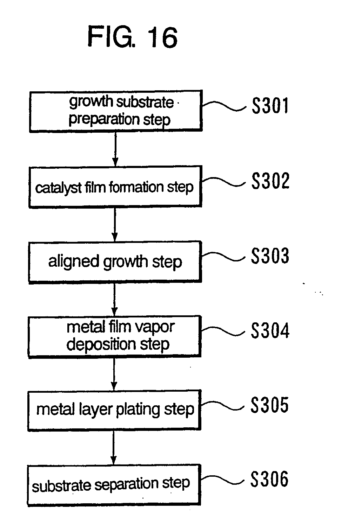

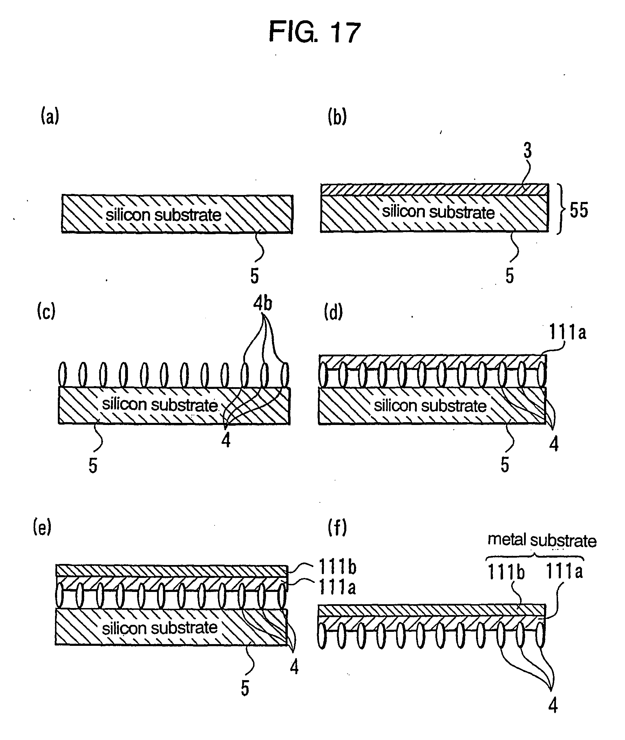

Fig. 16 shows a flow diagram illustrating the manufacturing steps of the carbon nanotube manufacturing method in accordance with the third embodiment of the present invention, and Fig. 17 shows a series of schematic diagrams corresponding to the manufacturing process steps shown in Fig. 16.

As shown in Fig. 16, the carbon nanotube manufacturing method in accordance with the third embodiment mainly includes following six processes (six steps): a growth substrate preparation step (S301) for preparing a silicon substrate 5, a catalyst film formation step (S302) for forming a catalyst film 3 on the surface of the silicon substrate 5, an aligned growth step (S303) for causing the aligned growth of the carbon nanotubes 4··· on the surface of the silicon substrate 5 while the carbon nanotubes 4··· are trapping as the nuclei the catalyst particles which form the formed catalyst film 3 as nuclei, a metal film vapor deposition step (S304) for vapor depositing a metal film 111a on the side having the tips 4b of the alignedly grown carbon nanotubes 4···, a metal layer plating step (S305) as a metal layer formation step for plating a metal layer 111b on the vapor deposited metal film 111a, a substrate separation step (S306) for separating the carbon nanotubes 4··· from the silicon substrate 5.

The growth substrate preparation step in the step S301 is a step for preparing the silicon substrate 5 on which the carbon nanotubes 4··· are formed, as shown in Fig. 17 (a).

The silicon substrate 5 may be a plate-like member made of for example an n-type silicon.

The catalyst film formation step in step S302 is a step for forming the catalyst film 3 on the surface of the silicon substrate 5 by the catalyst film forming apparatus 200, to thereby form the growth substrate 55, as shown in Fig. 17 (b).

The aligned growth step in step S303 is a step for causing the aligned growth of the carbon nanotubes 4··· on the surface of the silicon substrate 5 of the growth substrate 55 by the aligned growth apparatus 300, as shown in Fig. 17 (c).

The carbon nanotubes 4··· are alignedly grown and formed by the aligned growth apparatus 300 shown in Fig. 2.

The aligned growth method of the carbon nanotubes 4··· in the aligned growth step is generally similar to the step S104 of the first embodiment, and the aligned growth apparatus 300 also is identical, so that the detailed description is omitted here.

The metal film vapor deposition step in the step S304 is a step for vapor depositing a metal film 111a on the side having the tips 4b of the carbon nanotubes 4··· by using the metal film vapor deposition apparatus 700, as shown in Fig. 17 (d). The metal film vapor deposition apparatus 700 is an apparatus similar to the catalyst film forming apparatus 200, and is for example one of the vacuum vapor deposition apparatus, molecular beam epitaxy (MBE) apparatus, ion plating apparatus, ion beam epitaxy apparatus, sputtering apparatus, and plating apparatus.

The metal film vapor deposition apparatus 700 vapor deposits a metal layer 111a made of for instance aluminum, nickel, or copper to the thickness of a few nanometers to several hundreds nanometers on the side having the tips 4b of the carbon nanotubes 4···.

The metal layer plating step in the step S305 is a step for plating a metal layer 111b on the deposited metal film 111a by using the metal layer plating apparatus 800, as shown in Fig. 17 (e). A common plating apparatus can be used for the metal layer plating apparatus 800.

The silicon substrate 5 (the silicon substrate 5 in which the metal film 111a is vapor deposited on the carbon nanotubes 4··· formed on the surface of the silicon substrate 5) is dipped in a copper plating solution contained in a plating bath of the metal layer plating apparatus 800 (a solution containing 50 grams of copper sulfate (CuSO₄), 12.5 cc of sulfuric acid (H₂SO₄), 225 cc of water (H₂O), a trace of sodium chloride (NaCl)), and a metal layer 111b (for example, a metal layer formed from copper) having a thickness of a few nanometers to several hundreds nanometers is plated on the surface of the metal film 111a. In the present embodiment, the metal film 111a of the silicon substrate 5 dipped in a copper plating solution at the temperature of 40 to 50 degrees centigrade was subjected to plating for one hour with the electric current density of 0.05 to 0.1 ampere to form the metal layer 111b.

The plating by the metal layer plating apparatus 800 is not limited to copper plating, and it may include plating of such metals as gold, indium, silver, nickel alloys (pure Ni, Ni-Fe, Ni-Cr, and Ni-Cu), cobalt alloys (pure Co, Co-Ni, Co-Cr, and Co-Fe), iron alloys (pure Fe, Fe-Cr, and Fe-Ta), and aluminium alloys (pure Al, Al-Cu, Al-Ti, and Al-Nd).

The substrate separation step in the step S306 is a step for separating the carbon nanotubes 4··· from the silicon substrate 5 by the substrate separating apparatus 600 to thereby dispose the carbon nanotubes 4... on a metal substrate (the metal film 111a, the metal layer 111b), as shown in Fig. 17 (f).

The methods of separating carbon nanotubes 4··· from the silicon substrate 5 include, in addition to the method described in the second embodiment above, a method for separation in which a large current is applied through the silicon substrate 5 to heat the silicon substrate 5 so as to facilitate the peeling off and separation of the carbon nanotubes 4···, a method for separation in which ultrasound waves are applied to the silicon substrate 5 to facilitate the peeling off and separation of the carbon nanotubes 4···, and so on.

The carbon nanotubes 4··· implanted in a metal substrate formed from the metal film 111a and the metal layer 111b have for example a diameter of a few nanometers to over ten nanometers and a length of 1 micrometer to several tens micrometers, and they are formed in the order of a million to ten billions per each square millimeter (mm²) .

With such apparatus and method, the carbon nanotubes 4··· can be suitably manufactured similarly to the preceding first and second embodiments. The well aligned carbon nanotubes 4··· can be orderly grown on a metal substrate.

The carbon nanotubes 4··· on the silicon substrate 5 having metal layer 111b formed thereon by the metal layer plating step shown in Fig. 17 (e) may further be grown thereafter by the aligned growth apparatus 300.

### [ fourth embodiment ]

The fourth embodiment in accordance with the present invention is described in greater details herein below. The same reference numerals are used for the same elements as those of the first, second and third embodiments, and only the different elements are described in details.

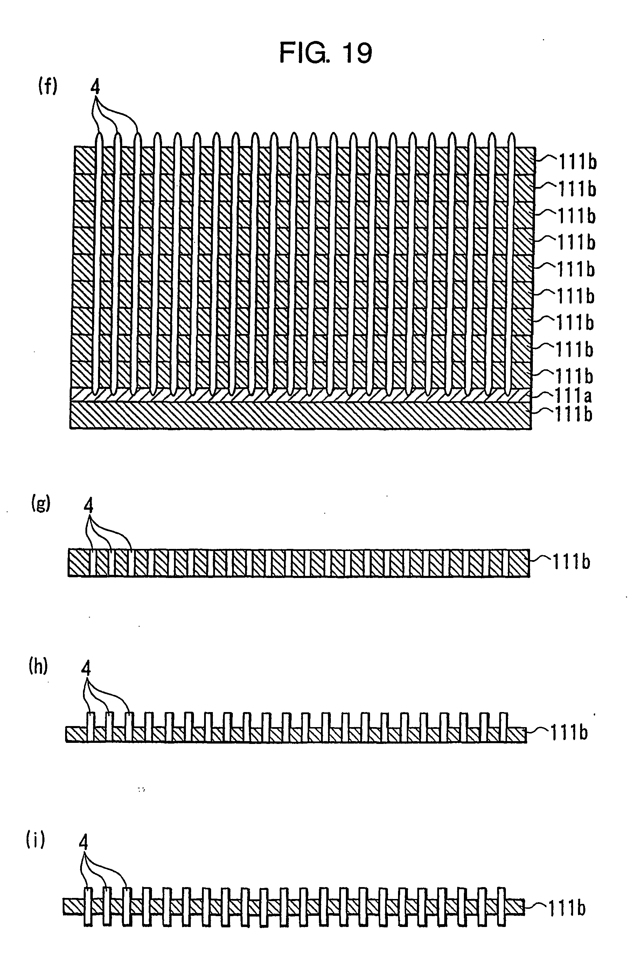

Fig. 18 and Fig. 19 show schematic diagrams illustrating the carbon nanotube manufacturing method in accordance with the fourth embodiment of the present invention.

As shown in Fig. 18 and Fig. 19, the carbon nanotube manufacturing method in accordance with the fourth embodiment of the present invention is a method for manufacturing carbon nanotubes based on the carbon nanotubes substrate (CNT substrate) having the carbon nanotubes 4··· implanted in a metal substrate comprising a metal film 111a and a metal layer 111b shown in Fig. 17 (f), which substrate was produced in accordance with the third embodiment of the present invention, so that more CNT substrates can be produced.

Fig. 18 (a) shows a CNT substrate produced in accordance with the third embodiment of the present invention.

The CNT substrate is mounted on a predetermined place in the aligned growth apparatus 300 (on the anode substrate 23 of the electric field generator 20) to cause well aligned carbon nanotubes 4··· to be further grown from the tips of the carbon nanotubes 4··· disposed on the CNT substrate in the second step of aligned growth (see Fig. 18 (b)).

Then, in a manner similar to the metal film vapor deposition step (see Fig. 12 (d)) in accordance with the second embodiment, a metal layer 111b is vapor deposited, by a metal layer vapor depositing apparatus, for example, around the sides of the carbon nanotubes 4··· and on the surface of the metal film 111a in the second step of metal layer formation (see Fig. 18 (c)).

Thereafter, well aligned carbon nanotubes 4··· are further grown by the aligned growth apparatus 300 (see Fig. 18 (d)), and a metal layer 111b is vapor deposited by the metal layer vapor deposition apparatus around the sides of the carbon nanotubes 4··· and on the surface of the metal layer 111b (see Fig. 18 (e)).

As can be appreciated from the foregoing description, the iterative repetition of the aligned growth of the carbon nanotubes 4··· and the vapor deposition of metal layer 111b allows the carbon nanotubes 4··· to be alignedly grown much longer, while forming a CNT substrate like product covered by a thick metal layer 111b, as shown in Fig. 19 (f).

Next, the thick metal layer 111b of the CNT substrate-like product shown in Fig. 19 (f) is sliced by a cutting device having such as a diamond cutter at a predetermined thickness, in the direction perpendicular to the direction of the aligned growth of the carbon nanotubes 4··· (see Fig. 19 (g)).

Then, the cut surface side of the metal layer 111b of the slice shown in Fig. 19 (g) is removed to a predetermined depth by for example a metal layer removing apparatus. The metal layer removing apparatus may be an apparatus for dissolving the metal layer 111b, which apparatus dissolves the metal layer 111b with a metal layer removing solution (for instance, hydrochloric acid, nitric acid, sulfuric acid) stored in the metal layer removing apparatus.

By dissolving and removing a predetermined thickness of the metal layer 111b, the carbon nanotubes 4··· are exposed by a predetermined length from the metal layer 111b (see Fig. 19 (h)).

In this manner, a CNT substrate as shown in Fig. 19 (h) can be formed, which substrate comprises a metal layer 111b and carbon nanotubes 4···, with the carbon nanotubes 4... protruding from the metal layer 111b by a predetermined length.

The carbon nanotubes 4··· disposed on a metal substrate formed from the metal layer 111b have for example a diameter of a few nanometers to over ten nanometers and a length of 1 micrometer to several tens micrometers, and they are formed in the order of a million to ten billions per each square millimeter (mm²).

With this method, the carbon nanotubes 4 can be suitably formed similarly to the first, second and third embodiments. In addition, well aligned carbon nanotubes 4··· can be orderly disposed on the metal substrate.

More specifically, by starting from a CNT substrate having carbon nanotubes 4··· disposed on a metal substrate (the metal film 111a, the metal layer 111b), the iterative repetition of aligned growth of the carbon nanotubes 4··· and the vapor deposition (lamination) of the metal layer 111b allows the formation of a number of CNT substrates (a CNT substrate comprising a metal layer 111b and carbon nanotubes 4).

This method does not need any expensive silicon substrate in the manufacturing process, allowing the manufacturing cost to be reduced.

In addition, this method does not need a process of forming a catalyst film by using a catalyst film forming apparatus such as a sputtering apparatus, allowing also the manufacturing cost to be reduced.

In particular, by the application of CNT substrate-like product as shown in Fig. 19 (f), a copper wire containing extremely long carbon nanotubes 4··· (when the metal layer 111b is made of copper) can be manufactured. The well aligned carbon nanotubes 4··· are orderly disposed along the direction of electric power transmission of the copper wire (conducting wire), making the conducting wire super low resistant, thus providing a conducting wire which allows the electric power transmission loss to be significantly decreased.

At the time when the metal layer removing apparatus dissolves and removes a predetermined thickness from the cut surface side of the metal layer 111b of the slice shown in Fig. 19 (g), the metal layer 111b can be dissolved not only in one single cut surface side as shown in Fig. 19 (h), but also can be dissolved in both sides of the metal layer 111b, as shown in Fig. 19 (i), so as to form a CNT substrate having a structure in which the carbon nanotubes 4··· extend through the metal layer 111b and are exposed from both sides of the metal layer 111b.

By using the carbon nanotube manufacturing apparatus and manufacturing method in accordance with the present invention, well aligned carbon nanotubes 4··· can be produced at a higher productivity. The carbon nanotube manufacturing apparatus as described above, which uses methanol for the raw material of carbon nanotubes 4··· though, facilitates easier maintenance and control of the apparatus in preventing the explosion and fire of methanol.

Although, in the description of the preferred embodiments above, methanol has been cited for the organic substance as the raw material by way of example, the present invention should not be considered to be limited thereto, and the usable organic substances may be any substance that contains carbons (C), such as for example ethanol, 1-butanol, 1-octanol, ant the like.

Depending on the type of organic substances being used, a variety of types and shapes of carbon nanotubes can be manufactured.

It should be noted here that any other details and structures can be appropriately modified.

For instance, when the carbon nanotubes are being grown, the growth substrate may be rotated in order to eliminate the non-uniformity due to the growth location.

For instance, instead of replacing the gas in the apparatus with an inert gas (argon), the gas can be replaced with nitrogen gas.

### INDUSTRIAL APPLICABILITY

The carbon nanotube manufacturing method using the carbon nanotube manufacturing apparatus in accordance with the present invention allows the manufacture of well aligned carbon nanotubes by growing carbon nanotubes in a gas phase in the direction of the applied electric field by the effect of electric field. Consequently, the present invention can manufacture well aligned carbon nanotubes, with easier maintenance and control than the conventional method in which carbon nanotubes are formed by dipping a silicon substrate in the alcohol solution.

With a plurality of well aligned carbon nanotubes, the electric field can be applied in the longitudinal direction of almost all of the carbon nanotubes, so that the electric field is concentrated at the tips of the carbon nanotubes and electrons are locally concentrated thereto. The electrons can be emitted from the tips of the carbon nanotubes at a high efficiency, allowing the emission efficiency to be increased.

Consequently, the product can be used as the electron emission electrode which emits electrons from the carbon nanotubes, and by recycling the electrons emitted from the electron emission electrode, the product can be applied to an electric power generator for generating electric current.

## Claims

1. A carbon nanotube manufacturing apparatus having an aligned growth means for causing an aligned growth of a plurality of carbon nanotubes quasi-vertically on a growth substrate,
wherein said aligned growth means comprises:
an ionizing means for ionizing the vaporized gas of a predetermined carbon-containing compound;
an electric field generating means for generating an electric field; and
a heating means for heating said growth substrate placed within the electric field generated by said electric field generating means, and
wherein said aligned growth means is adapted to cause the vaporized gas of said carbon-containing compound, the vaporized gas being ionized by said ionizing means, to pass through an electric field generated by said electric field generating means, thereby causing the vaporized gas of said carbon-containing compound to come into contact with said growth substrate.

2. A carbon nanotube manufacturing apparatus according to claim 1,
wherein said growth substrate is a substrate having a catalyst film formed on the surface of a silicon layer containing silicon or a silicon compound.

3. A carbon nanotube manufacturing apparatus according to claim 1 or claim 2,
wherein said ionizing means comprises a negative ion generator, and
wherein said negative ion generator provides electrons to the vaporized gas of said carbon-containing compound to negatively charge the vaporized gas of said carbon-containing compound.

4. A carbon nanotube manufacturing apparatus according to any one of claims 1 to 3, comprising:
a growth substrate forming means for forming said growth substrate by forming growth film on a surface of a predetermined metal substrate and forming a catalyst film on a surface of said growth film;
a growth film removing means, for removing said growth film after the aligned growth of carbon nanotubes by said aligned growth means; and
a substrate forming means for dissolving said metal substrate, embedding one ends of said carbon nanotubes disposed on the surface of said metal substrate in said metal substrate, and then solidifying said metal substrate.

5. A carbon nanotube manufacturing apparatus according to any one of claims 1 to 3, comprising:
a growth substrate forming means for forming a catalyst film on a surface of a silicon substrate to form said growth substrate;
a metal substrate forming means for inserting the tips of said carbon nanotubes into molten metal after the aligned growth of carbon nanotubes by said aligned growth means, and thereafter solidifying said metal, to thereby form a metal substrate; and
a separating means for separating said carbon nanotubes from said silicon substrate.

6. A carbon nanotube manufacturing method, comprising:
a growth film formation step for forming a growth film on a surface of a predetermined metal substrate;
a catalyst film formation step for forming a catalyst film formed from a predetermined catalyst on the surface of said growth film formed in said growth film formation step;
an aligned growth step for causing an aligned growth of a plurality of carbon nanotubes on the surface of said metal substrate through said growth film, by causing a catalytic reaction between said catalyst forming said catalyst film formed by said catalyst film formation step and the vaporized gas of a predetermined carbon-containing compound;
a growth film removal step for removing said growth film to dispose, on the surface of said metal substrate, said carbon nanotubes alignedly grown by said aligned growth step; and
a substrate formation step for dissolving said metal substrate, embedding one end of each of said carbon nanotubes disposed on the surface of said metal substrate, and thereafter solidifying said metal substrate.

7. A carbon nanotube manufacturing method, comprising:
a catalyst film formation step for forming a catalyst film formed from a predetermined catalyst on the surface of a predetermined growth substrate;
an aligned growth step for causing a catalytic reaction between said catalyst forming said catalyst film formed by said catalyst film formation step and the vaporized gas of a predetermined carbon-containing compound, to thereby cause an aligned growth of a plurality of carbon nanotubes quasi-vertically on the surface of said growth substrate;
a carbon nanotube implanting step for dissolving a predetermined metal substrate, inserting the tips of said carbon nanotubes alignedly grown by said aligned growth step into said molten metal substrate, and thereafter solidifying said metal substrate; and
a substrate separation step for separating said carbon nanotubes from said growth substrate.

8. A carbon nanotube manufacturing method, comprising:
a catalyst film formation step for forming a catalyst film formed from a predetermined catalyst on a surface of a predetermined growth substrate;
an aligned growth step for causing a catalytic reaction between said catalyst forming said catalyst film formed by said catalyst film formation step and the vaporized gas of a predetermined carbon-containing compound, to thereby cause an aligned growth of a plurality of carbon nanotubes quasi-vertically on the surface of said growth substrate;
a metal film vapor deposition step for vapor depositing a predetermined metal film layer on the side having the tips of said carbon nanotubes alignedly grown by said aligned growth step;
a metal layer formation step for forming a predetermined metal layer on said metal film formed by said metal film vapor deposition step; and
a substrate separation step for separating said carbon nanotubes from said growth substrate.

9. A carbon nanotube manufacturing method according to claim 8, wherein said substrate separation step comprises:
a second step of aligned growth for causing an aligned growth of said carbon nanotubes separated from said growth substrate in said substrate separation step;
a second step of metal layer formation for forming a predetermined metal layer on side surfaces of said carbon nanotubes alignedly grown in said second step of aligned growth and on a surface of said metal film in which rear ends of said carbon nanotubes are embedded;
a metal layer slicing step for slicing, in the direction perpendicular to the aligned growth of said carbon nanotubes, said metal layer formed and laminated by said second step of metal layer formation, to thereby form a slice having a predetermined thickness; and
a metal layer removal step for removing, in the direction of aligned growth of said carbon nanotubes, a predetermined amount of metal layer of said slice formed in said metal layer slicing step, to thereby expose a predetermined amount of said carbon nanotubes.

10. A carbon nanotube manufacturing apparatus according to any one of claims 6 to 9,
wherein said aligned growth step comprises:
an ionizing step for ionizing the vaporized gas of a predetermined carbon-containing compound;
an electric field application step for applying an electric field to the vaporized gas of said carbon-containing compound, the vaporized gas being ionized in said ionizing step; and
a heating step for heating said metal substrate or said growth substrate, and
wherein, in said electric, field application step, an electric field is applied to the vaporized gas of said carbon-containing compound, the vaporized gas being ionized in said electric field application step, to bring the vaporized gas of said carbon-containing compound into contact with said metal substrate or said growth substrate, thereby causing an aligned growth of a plurality of carbon nanotubes quasi-vertically on the surface of said metal substrate or said growth substrate.
